(19) **Europäisches Patentamt / European Patent Office / Office européen des brevets**

(11) **EP 4 296 056 A1**

(12) # EUROPEAN PATENT APPLICATION
published in accordance with Art. 153(4) EPC

(43) Date of publication:
**27.12.2023 Bulletin 2023/52**

(21) Application number: **22756327.7**

(22) Date of filing: **21.02.2022**

(51) International Patent Classification (IPC):
**B32B 27/20** (2006.01)    **C09D 5/00** (2006.01)
**C09D 5/29** (2006.01)    **C09D 7/61** (2018.01)

(52) Cooperative Patent Classification (CPC):
**B32B 27/20; C09D 5/00; C09D 5/29; C09D 7/61**

(86) International application number:
**PCT/JP2022/006993**

(87) International publication number:
**WO 2022/177010 (25.08.2022 Gazette 2022/34)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **22.02.2021 JP 2021026481**
**17.09.2021 JP 2021152482**

(71) Applicant: **Nippon Paint Automotive Coatings Co., Ltd.**
**Hirakata-shi, Osaka 573-1153 (JP)**

(72) Inventors:
• **ISHIKAWA, Tomoyuki**
**Hirakata-shi, Osaka 573-1153 (JP)**

• **YAMAGUCHI, Kohei**
**Hirakata-shi, Osaka 573-1153 (JP)**
• **YAMANAKA, Eiji**
**Hirakata-shi, Osaka 573-1153 (JP)**
• **JIZODO, Azusa**
**Hirakata-shi, Osaka 573-1153 (JP)**
• **ARAKI, Yoshito**
**Hirakata-shi, Osaka 573-1153 (JP)**
• **JINNO, Yohei**
**Hirakata-shi, Osaka 573-1153 (JP)**

(74) Representative: **Mewburn Ellis LLP**
**Aurora Building**
**Counterslip**
**Bristol BS1 6BX (GB)**

(54) **MULTI-LAYER COATING FILM**

(57) An object of the present invention is to provide a multi-layer coating film having at least a clear coating film and a base coating film and having good chipping resistance, and preferably to provide a multi-layer coating film further having good designability. The multi-layer coating film of the present invention is a multi-layer coating film comprising a substrate, a base layer formed thereon, and a clear layer formed on the base layer, wherein the base layer comprises a luster pigment, wherein the base layer has an erosion index of 45 $\mu m^2/g$ or less where the erosion index is a value obtained by multiplying an erosion rate of the base layer by a thickness of the base layer, and wherein the erosion rate of the base layer is measured using a micro slurry jet erosion method at a projection power at which an erosion rate with respect to a silicon wafer is 0.635 $\mu m/g$.

EP 4 296 056 A1

**Description**

TECHNICAL FIELD

The present invention relates to a multi-layer coating film.

BACKGROUND ART

On articles to be coated such as automobile bodies, multi-layer coating films are formed in order to impart corrosion resistance, chipping resistance, designability, scratch resistance, etc. For example, a multi-layer coating film is formed by forming an intermediate coating film, a base coating film, a clear coating film, and, as necessary, a chipping primer layer or the like on a steel sheet having been provided with rust-proof processing such as electrodeposition coating. Chipping is a kind of damage such as cracking or peeling that may occur when a small stone or the like collides with a coated surface of a vehicle outer plate of an automobile, and when chipping occurs, water or the like may enter from a chipping portion, causing rusting or the like on a base material of the outer plate.

Conventionally, in order to cope with chipping, development of an intermediate coating film or a multi-layer coating film obtained has been advanced by improving a chipping primer. As such a multi-layer coating film, there has been proposed, for example, a multi-layer coating film having an intermediate coating film formed from a composition including an acrylic-modified chlorinated polyolefin, a styrene-based plastic elastomer having an acid group, an epoxy resin, a blocked polyisocyanate compound, and a pigment, wherein the acrylic portion of the acrylic-modified chlorinated polyolefin has a glass transition temperature of -50 to 0°C, and the solid content mass ratio of the acrylic portion to the chlorinated polyolefin portion is 7 : 3 to 2 : 8 (Patent Literature 1).

CITATIONS LIST

PATENT LITERATURE

Patent Literature 1: JP-A-2020-094075

SUMMARY OF INVENTION

TECHNICAL PROBLEMS

An object of the present invention is to provide a multi-layer coating film having at least a clear coating film and a base coating film and having good chipping resistance, and preferably to provide a multi-layer coating film further having good designability.

SOLUTIONS TO PROBLEMS

In order to solve the above-described problems, the present invention provides the following embodiments.

[1] A multi-layer coating film comprising a substrate, a base layer formed on the substrate, and a clear layer formed on the base layer,

wherein the base layer comprises a luster pigment, and
wherein an erosion index of the base layer is 45 $\mu$m$^2$/g or less where the erosion index is a value obtained by multiplying an erosion rate of the base layer by a thickness of the base layer, and
wherein the erosion rate of the base layer is measured using a micro slurry jet erosion method at a projection power with which an erosion rate with respect to a silicon wafer is 0.635 $\mu$m/g.

[2] The multi-layer coating film recited in [1], wherein the base layer comprises one or two or more layers, and

wherein an nth layer is defined as an nth base layer in a case where the base layer comprises two or more layers, wherein the erosion index is calculated on a basis of the following formula:

[Formula 1]

$$\text{Erosion index} \ (\mu m^2/g) = \sum_{i=1}^{n} (E_i' \times t_i)$$

wherein n represents an integer of 2 or more,
wherein an erosion rate of the nth base layer measured using a micro slurry jet erosion method at a projection power with which an erosion rate with respect to a silicon wafer is 0.635 $\mu$m/g is represented by $E_n'$ ($\mu$m/g), and a thickness of the nth base layer is represented by $t_n$ ($\mu$m).

ADVANTAGEOUS EFFECTS OF INVENTION

The multi-layer coating film of the present invention exhibits good chipping resistance, and preferably further exhibits good designability. More preferably, both chipping resistance and designability can be achieved even when the multi-layer coating film has no intermediate coating layer.

DESCRIPTION OF EMBODIMENTS

The present inventors conducted various studies on improvement of chipping resistance focusing on a base coating film, which improvement had been conventionally conducted with an intermediate coating film or a chipping primer. In these studies, the present inventors paid attention to an erosion rate, which can be understood as an index of ease of scraping of a coating film. Then, it has been found that the chipping resistance itself depends not only on the ease of scraping of a base coating film but also on the thickness of the base coating film; that the influence of the film thickness on the chipping resistance can be eliminated by multiplying the erosion rate by the thickness of the base coating film; and that the chipping resistance is improved by setting the index (erosion index) obtained by multiplying the erosion rate by the film thickness to 45 $\mu$m$^2$/g or less.

Furthermore, the present inventors have found that, in a so-called highly designable coating color, which is required to have superior high orientation of a luster pigment, the orientation of the luster pigment is easily maintained and chipping resistance can be improved while designability is provided by forming a base coating film to have a first base coating film and a second base coating film; and by controlling an erosion index calculated in consideration of the thicknesses of both the coating films to less than 45 $\mu$m$^2$/g. As a result, the present invention has been accomplished.

The multi-layer coating film of the present invention includes a substrate, a base layer formed thereon, and a clear layer further formed on the base layer.

The substrate is just required to be one having at least a base material layer such as a metal layer, a plastic layer, or a foam layer, and may have an intermediate coating layer formed on the base layer side of the substrate.

Examples of the metal to form the metal layer include iron, copper, aluminum, tin, zinc, and alloys thereof. The metal layer may be in a plate shape and may be a molded article. Specifically, examples of the molded article include bodies, parts, and the like of automobiles such as passenger cars, trucks, motorcycles, and buses.

The metal layer (preferably, on the base layer side of the metal layer) may have been subjected to chemical conversion treatment in advance with a phosphate salt, a zirconium salt, a chromate salt, or the like, and subsequently to formation of an electrodeposition coating film layer. Examples of the electrodeposition coating composition which can be used for the formation of an electrodeposition coating film layer include a cationic electrodeposition coating composition and an anionic electrodeposition coating composition.

Examples of the resin to form the plastic layer include polypropylene resin, polycarbonate resin, urethane resin, polyester resin, polystyrene resin, ABS resin, vinyl chloride resin, and polyamide resin. The plastic layer may be in a plate shape or may be a molded article. Examples of the molded article include automobile parts such as spoilers, bumpers, mirror covers, grills, and doorknobs. The plastic layer (preferably on the base layer side of the plastic layer) may have been subjected to primer coating.

The intermediate coating film is formed from an intermediate coating composition including an intermediate coating film-forming resin, a coloring pigment, an extender pigment, and the like. As the coating film-forming resin, the compounds to be recited as examples for the coating film-forming resin (A) to be used in a base coating composition described later can be used. As the coating film-forming resin to be used for the intermediate coating composition, a combination of an acrylic resin and/or a polyester resin with an amino resin and/or an isocyanate is suitably used from the viewpoint of various performances of the intermediate coating film.

Examples of the coloring pigment contained in the intermediate coating composition include pigments having no chroma such as carbon black and titanium dioxide, and pigments having chroma for compensating the hue of the base layer. When the intermediate coating composition contains a pigment, the content of the pigment is preferably 0.1 parts by mass or more, and preferably 150 parts by mass or less, more preferably 100 parts by mass or less, and still more preferably 50 parts by mass or less, based on 100 parts by mass of the resin solid content.

The thickness of the intermediate coating film is, for example, preferably 3 to 50 $\mu$m, and preferably 5 to 30 $\mu$m.

The substrate is preferably only a base material layer or a laminate of a base material layer and an intermediate coating layer, and the base material layer may be only a metal layer, and is preferably a laminate of a metal layer and an electrodeposition coating film layer. That is, the substrate is preferably only the metal layer.; a laminate of a metal layer and an electrodeposition coating layer; or a laminate of a metal layer, an electrodeposition coating layer, and an intermediate coating layer is preferable.

The base layer includes a luster pigment, and erosion index of which is 45 $\mu$m$^2$/g or less where the erosion index is a value obtained by multiplying an erosion rate of the base layer by a thickness (t) of the base layer, and the erosion rate (E') of the base layer is measured at a projection power with which an erosion rate with respect to a silicon wafer is 0.635 $\mu$m/g using a micro slurry erosion method (an MSE method). For this, the multi-layer coating film of the present invention can achieve both designability and chipping resistance.

The erosion index is preferably 44 $\mu$m$^2$/g or less, more preferably 30 $\mu$m$^2$/g or less, and still more preferably 20 $\mu$m$^2$/g or less, and may be, for example, 10 $\mu$m$^2$/g or more, or 15 $\mu$m$^2$/g or more.

The erosion rate may be, for example, 3.4 $\mu$m/g or less, and may be preferably less than 2.89 $\mu$m/g, more preferably 2.88 $\mu$m/g or less, still more preferably 2.5 $\mu$m/g or less, and further preferably 2 $\mu$m/g or less, but is not limited thereto. When the erosion rate is in the above range, the breaking energy of the base layer is large, and impact is moderately absorbed, so that chipping resistance can be improved. The erosion rate may be, for example, preferably 0.1 $\mu$m/g or more, more preferably 0.5 $\mu$m/g or more, and still more preferably 0.7 $\mu$m/g or more, but is not limited thereto. When the erosion rate is in the above range, the elastic modulus of the base layer is moderate, so that chipping resistance can be improved.

The MSE method is a test method where an aqueous dispersion liquid, in which fine particles (for example, having a particle size of 1 to 10 $\mu$m) are dispersed in water, is mixed and accelerated with compressed air, and is projected onto a sample surface at a high speed (for example, 60 to 100 m/s) to generate abrasion on the sample surface. It is possible to evaluate characteristics of the sample from an erosion mark generated by the projection of the fine particles and a profile shape thereof. The erosion rate is a value obtained by dividing the erosion depth by the amount of the fine particles projected (projection amount), and can be used as an index of the sample strength. For example, when the erosion rate is high, it implies that the erosion depth per unit projection amount is large and the sample is prone to wear (that is, the strength is low), whereas when the erosion rate is low, it implies that the erosion depth per unit projection amount is small and the sample is less likely to wear (that is, the strength is high).

As to the erosion rate of the base layer, for example, unit projection is carried out such that the erosion depth is in a range of 0.1 to 1 $\mu$m, and an erosion rate is determined for each unit projection. The erosion rate of the base layer can be calculated on the basis of the erosion rate determined for each unit projection. The setting range of the unit projection amount can be a projection amount within the range of 0.5 g to 999 g which affords sufficient resolution in view of the thickness of that layer.

In the present invention, the erosion depth represents a depth from an unprojected site to a projected site.

More specifically, the erosion rate can be measured by projecting an aqueous dispersion liquid containing fine particles with a direction perpendicular to the surface of the multi-layer coating film as a projection direction and with a distance (projection distance) from the projection position to the surface of the multi-layer coating film set to 4 mm at room temperature (25°C) and atmospheric pressure (1013 hPa). In the present invention, polygonal alumina having an average particle size D50 of 1.2 $\mu$m is used as the fine particles, and the fine particles are contained in a proportion of 3% by mass in the aqueous dispersion liquid. Furthermore, the projection power with the time of projection is set to a projection power with which the erosion rate with respect to a silicon wafer is 0.635 $\mu$m/g. The projection power can be adjusted by a projection speed and a projection pressure.

The depth from the unprojected site to the projected site can be measured with a stylus profilometer.

The erosion rate is preferably defined by an average of values obtained by performing measurement three times.

The number of layers of the base layer may be one or two or more. The erosion index of the base layer itself that is a single layer may be in the above range, and the base layer may have two or more layers with the entire base layer having the erosion index described above. In addition, the erosion rate of the base layer itself that is a single layer may be in the above range, and the base layer may have two or more layers with at least one of the two or more layers having the erosion rate described above.

When the base layer has two or more layers, the erosion rate of the entire base layer can be a value obtained by weighted-averaging the erosion rates of the respective layers on the basis of the respective film thicknesses.

For example, in a case where the base layer has two or more layers, when an nth layer is defined as an nth base layer, wherein n represents an integer of 2 or more, an erosion rate of the nth base layer is represented by $E_n$' ($\mu$m/g), the thickness of the second base layer is represented by $t_n$ ($\mu$m), and the thickness of the entire base layer is

represented by t ($\mu$m), the erosion rate E' ($\mu$m/g) of the entire base layer is calculated on the basis of the following formula.

[Formula 2]

$$E' = \sum_{i=1}^{n} (E_i' \times t_i)/t$$

The erosion index ($\mu m^2/g$) of the entire base layer is a value obtained by multiplying the erosion rate E' ($\mu$m/g) of the entire base layer by the thickness t ($\mu$m) of the entire base layer, and can be calculated on the basis of the following formula.

[Formula 3]

$$\text{Erosion index} \quad (\mu m^2/g) = \sum_{i=1}^{n} (E_i' \times t_i)$$

n (namely, the number of the layers contained in the base layer) is an integer of 2 or more, preferably an integer of 10 or less, more preferably an integer of 5 or less, and still more preferably an integer of 3 or less.

In particular, in a case where the base layer contains a first base layer and a second base layer, when the erosion rate of the first base layer is represented by $E_i'$, the erosion rate of the second base layer is represented by $E_2'$, the thickness of the first base layer is represented by $t_1$, and the thickness of the second base layer is represented by $t_2$, the erosion rate E' of the entire base layer can be calculated on the basis of the following formula.

$$E' = (E_1' \times t_1 + E_2' \times t_2)/(t_1 + t_2)$$

Then, the erosion index ($\mu m^2/g$) of the entire base layer can be calculated as a value (E' $\times$ ($t_1 + t_2$)) obtained by multiplying the erosion rate E' ($\mu$m/g) of the entire base layer by the sum of the thickness ti ($\mu$m) of the first base layer and the thickness $t_2$ ($\mu$m) of the second base layer (namely, the thickness t of the entire base layer).

The base layer contains a luster pigment, and exhibits designability (especially, gloss) owing to containing the luster pigment. When the base layer has two or more layers (preferably two layers), and particularly when the base layer has a base layer including the luster pigment in a highly oriented state and a base layer in which the erosion rate is adjusted in relation to the thickness of each layer such that the erosion index of the entire base layer is 45 $\mu m^2/g$ or less, the orientation of the luster pigment is maintained through each functional separation and a multi-layer coating film having both high designability and chipping resistance is easily obtained. For this, it is also preferable to employ a base layer comprising a base layer including a luster pigment and a base layer containing no luster pigment.

The luster pigment is a pigment capable of reflecting light, and can impart a characteristic gloss to a coating film. Examples of the luster pigment include metals such as aluminum, copper, zinc, iron, nickel, and tin; alloys of these metals; metal oxides such as aluminum oxide; metal acid salt compounds such as mica (especially, interference mica pigment, white mica pigment, and the like); and graphite, and they may be used singly or two or more of them may be used in combination.

The average particle size (D50) of the luster pigment is preferably 2 to 50 $\mu$m, and more preferably 10 to 35 $\mu$m from the viewpoint of brightness, and the average thickness is preferably 0.1 to 5 $\mu$m.

The content of the luster pigment in the entire base layer is preferably 0.1% by mass or more, more preferably 0.5% by mass or more, and still more preferably 1% by mass or more, and is preferably 20% by mass or less, more preferably 15% by mass or less, and still more preferably 12% by mass or less.

When the base layer has two or more layers (preferably, when the base layer has a first base layer and a second base layer), the base layer is just required to have at least one layer including a luster pigment, and all layers (preferably, the first base layer and the second base layer) may contain a luster pigment. In this case, the content of the luster pigment is a value in the entire base layer. The contents of the luster pigment in the respective layers may be the same or different among the layers.

When the base layer has two or more layers, in one embodiment, at least one layer contains a luster pigment and the erosion index of the entire base layer is in the range recited above (namely, 45 $\mu m^2/g$ or less). In another embodiment, at least one layer contains a luster pigment, the erosion index of the entire base layer is in the range recited

above (namely, 45 $\mu$m$^2$/g or less), and the erosion rates of all layers (preferably, the first base layer and the second base layer) are in the range recited above (namely, less than 2.89 $\mu$m/g).

When the base layer has a first base layer and a second base layer, the first base layer and the second base layer are disposed such that the first base layer is located on the substrate side and the second base layer is located on the clear layer side.

The thickness of the first base layer is, for example, 3 $\mu$m or more, and preferably 5 $\mu$m or more, and is, for example, 50 $\mu$m or less, preferably 30 $\mu$m or less, more preferably 20 $\mu$m or less, and still more preferably 10 $\mu$m or less.

The thickness of the second base layer is, for example, 0.1 $\mu$m or more, preferably 3 $\mu$m or more, and more preferably 5 $\mu$m or more, and is, for example, 50 $\mu$m or less, preferably 30 $\mu$m or less, and more preferably 20 $\mu$m or less.

The base layer may have another base layer in addition to the first base layer and the second base layer.

The base layer is preferably a layer in contact with a clear layer described later.

The base layer can be formed as a cured product (a cured coating film) of a base coating composition containing a coating film-forming resin (A) and a pigment (B). The first base layer and the second base layer can be formed using a first base coating composition and a second base coating composition, respectively, and the components contained in the first base coating composition and the second base coating composition and the contents thereof may be the same as those of the base coating composition unless otherwise stated. The first base coating composition and the second base coating composition may be either the same or different.

The coating film-forming resin (A) preferably contains an acrylic resin (A1) and a urethane resin (A2).

The acrylic resin (A1) is preferably a polymer of a mixture (monomer mixture) of $\alpha,\beta$-ethylenically unsaturated monomers.

Examples of the $\alpha,\beta$-ethylenically unsaturated monomer include (meth)acrylate esters, polymerizable amide compounds, polymerizable aromatic compounds, polymerizable nitriles, $\alpha$-olefins, vinyl esters, and dienes.

In the present description, "(meth)acryl" shall mean both "acryl and/or methacryl".

Examples of the (meth)acrylate ester include aliphatic (meth)acrylate esters such as methyl (meth)acrylate, ethyl (meth)acrylate, n-propyl (meth)acrylate, n-butyl (meth)acrylate, isobutyl (meth)acrylate, t-butyl (meth)acrylate, pentyl (meth)acrylate, hexyl (meth)acrylate, heptyl (meth)acrylate, 2-ethylhexyl (meth)acrylate, and lauryl methacrylate; aromatic acrylate esters such as phenyl (meth)acrylate; and alicyclic acrylate esters such as isobornyl (meth)acrylate, cyclohexyl (meth)acrylate, tert-butylcyclohexyl (meth)acrylate, dicyclopentadienyl (meth)acrylate, and dihydrodicyclopentadienyl (meth)acrylate.

Examples of the polymerizable amide compound include (meth)acrylamide, N-methylol(meth)acrylamide, N-butoxymethyl(meth)acrylamide, N,N-dimethyl(meth)acrylamide, N,N-dibutyl(meth)acrylamide, N,N-dioctyl(meth)acrylamide, N-monobutyl(meth)acrylamide, N-monooctyl(meth)acrylamide 2,4-dihydroxy-4'-vinylbenzophenone, N-(2-hydroxyethyl)acrylamide, and N-(2-hydroxyethyl)methacrylamide.

Examples of the polymerizable aromatic compound include styrene, $\alpha$-methylstyrene, vinyl ketone, t-butylstyrene, parachlorostyrene, and vinylnaphthalene.

Examples of the polymerizable nitrile include (meth)acrylonitrile.

Examples of the $\alpha$-olefin include ethylene and propylene.

Examples of the vinyl ester include vinyl acetate and vinyl propionate.

Examples of the diene include butadiene and isoprene.

The content of the unit derived from the $\alpha,\beta$-ethylenically unsaturated monomer in the acrylic resin (A1) is preferably 50% by mass or more, more preferably 60% by mass or more, and still more preferably 70% by mass or more, and is preferably 99% by mass or less, more preferably 90% by mass or less, and still more preferably 85% by mass or less.

The acrylic resin (A1) preferably contains a unit derived from an $\alpha,\beta$-ethylenically unsaturated monomer having an acid group. As a result, the acrylic resin (A1) has an acid group, so that the dispersibility in water of the acrylic resin (A1) can be improved.

Examples of the $\alpha,\beta$-ethylenically unsaturated monomer having an acid group include (meth)acrylic acid, acrylic acid dimer, crotonic acid, 2-acryloyloxyethylphthalic acid, 2-acryloyloxyethylsuccinic acid, $\omega$-carboxy-polycaprolactone mono(meth)acrylate, isocrotonic acid, $\alpha$-hydro-$\omega$-((1-oxo-2-propenyl)oxy) poly(oxy(1-oxo-1,6-hexanediyl)), maleic acid, fumaric acid, itaconic acid, 3-vinylsalicylic acid, 3-vinylacetylsalicylic acid, 2-acryloyloxyethyl acid phosphate, and 2-acrylamido-2-methylpropanesulfonic acid, and (meth)acrylic acid and acrylic acid dimer are preferable.

The content of the unit derived from the $\alpha,\beta$-ethylenically unsaturated monomer having an acid group in the acrylic resin (A1) is preferably 0.5% by mass or more, more preferably 1% by mass or more, and still more preferably 2% by mass or more and is preferably 15% by mass or less, more preferably 12% by mass or less, and still more preferably 10% by mass or less.

The acrylic resin preferably contains a unit derived from an $\alpha,\beta$-ethylenically unsaturated monomer having a hydroxy group. As a result, the acrylic resin (A1) has a hydroxy group, and increases the crosslinkability in the base coating composition.

Examples of the α,β-ethylenically unsaturated monomer having a hydroxy group include hydroxyethyl (meth)acrylate, hydroxypropyl (meth)acrylate, hydroxybutyl (meth)acrylate, allyl alcohol, (meth)acrylic alcohol, and an adduct of hydroxyethyl (meth)acrylate and ε-caprolactone. Hydroxyethyl (meth)acrylate, hydroxybutyl (meth)acrylate, and an adduct of hydroxyethyl (meth)acrylate and ε-caprolactone are preferable.

The content of the unit derived from the α,β-ethylenically unsaturated monomer having a hydroxy group in the acrylic resin (A1) is preferably 1% by mass or more, more preferably 3% by mass or more, and still more preferably 5% by mass or more, and is preferably 30% by mass or less, more preferably 20% by mass or less, and still more preferably 15% by mass or less.

The acrylic resin (A1) may contain a unit derived from a crosslinkable monomer. Containing the unit derived from the crosslinkable monomer in the acrylic resin (A1) makes it easy to control the average particle size of the acrylic resin (A1) (for example, to 100 nm or less).

The crosslinkable monomer is a compound having two or more radically polymerizable unsaturated groups in one molecule. Examples of the crosslinkable monomer include bifunctional monomers such as divinylbenzene, ethylene glycol di(meth)acrylate, hexanediol di(meth)acrylate, polyethylene glycol di(meth)acrylate, allyl (meth)acrylate, 1,4-butanediol di(meth)acrylate, 1,6-hexane di(meth)acrylate, neopentylglycol di(meth)acrylate, pentaerythritol di(meth)acrylate, and divinylbenzene, and tri- or more functional monomers such as triallyl cyanurate, pentaerythritol tri(meth)acrylate, trimethylolpropane tri(meth)acrylate, and dipentaerythritol hexa(meth)acrylate. Allyl (meth)acrylate, ethylene glycol di(meth)acrylate, and divinylbenzene are preferable. As the crosslinkable monomer, one crosslinkable monomer may be used, or two or more crosslinkable monomers may be used in combination.

The content of the unit derived from the crosslinkable monomer in the acrylic resin (A1) is preferably 0.2% by mass or more, more preferably 0.5% by mass or more, and is preferably 20% by mass or less. When the content of the unit derived from the crosslinkable monomer is within the above range, it is easy to control the particle size of the acrylic resin (A1) (for example, to 100 nm or less).

The acid value of the acrylic resin (A1) is preferably 3 mg KOH/g or more, and more preferably 7 mg KOH/g or more, and is preferably 100 mg KOH/g or less, and more preferably 80 mg KOH/g or less.

The hydroxyl value of the acrylic resin (A1) is preferably 10 mg KOH/g or more, and more preferably 20 mg KOH/g or more, and is preferably 180 mg KOH/g or less, and more preferably 160 mg KOH/g or less.

The acid value and hydroxyl value of the acrylic resin (A1) can be calculated on the basis of the composition of the monomer mixture.

The glass transition temperature of the acrylic resin (A1) is preferably -20°C or higher and preferably 80°C or lower from the viewpoint of mechanical properties. The glass transition temperature of the acrylic resin (A1) can be calculated on the basis of the FOX formula, and for each monomer contained in the monomer mixture forming the acrylic resin (A1), the value described in Polymer Handbook (4th Edition, Wiley-Interscience, 1999) and the like of the glass transition temperature of a homopolymer of the monomer can be referred to.

The average particle size of the acrylic resin (A1) is preferably 300 nm or less, more preferably 150 nm or less, and still more preferably 100 nm or less, and is, for example, 20 nm or more, preferably 30 nm or more, and more preferably 40 nm or more. When the average particle size of the acrylic resin (A1) is within the above range, the transparency and the light transmissibility of a resulting coating film are good. The average particle size of the acrylic resin (A1) can be measured as a volume average value by a dynamic light scattering method.

The number average molecular weight of the acrylic resin (A1) is preferably 1,000 or more, more preferably 3,000 or more, and still more preferably 6,000 or more, and the upper limit thereof may be, for example, 300,000. When the acrylic resin (A1) contains a unit derived from a crosslinkable monomer, the number average molecular weight may be out of the above range.

In the present description, the number average molecular weight and the weight average molecular weight can be measured by gel permeation chromatography (GPC) using polystyrene as a standard sample.

The acrylic resin (A1) is preferably in the form of an emulsion.

As the acrylic resin (A1), one acrylic resin may be used, or two or more acrylic resins may be used in combination. Specifically, the acrylic resin (A1) may contain an acrylic resin (A1-1) present in the form of an emulsion and another acrylic resin (A1-2).

The average particle size of the emulsion of the acrylic resin (A1-1) is preferably 300 nm or less, and the lower limit thereof may be, for example, 50 nm or more. The average particle size of the emulsion can be measured as a volume average value by a dynamic light scattering method.

The acid value of the acrylic resin (A1-1) is preferably 3 to 50 mg KOH/g, and more preferably 7 to 40 mg KOH/g, and the hydroxyl value of the acrylic resin (A1-1) is preferably 10 to 150 mg KOH/g, and more preferably 20 to 100 mg KOH/g.

The acid value of the acrylic resin (A1-2) is preferably 10 to 100 mg KOH/g, and more preferably 20 to 80 mg KOH/g, and the hydroxyl value of the acrylic resin (A1-2) is preferably 20 to 180 mg KOH/g, and more preferably 30 to 160 mg KOH/g.

The content of the acrylic resin (A1-1) in the acrylic resin (A1) is preferably 50% by mass or more, more preferably 70% by mass or more, and still more preferably 75% by mass or more, and is 100% by mass or less, preferably 99% by mass or less, more preferably 95% by mass or less, and still more preferably 90% by mass or less.

The content of the acrylic resin (A1-2) in the acrylic resin (A1) is 0% by mass or more, preferably 1% by mass or more, more preferably 5% by mass or more, still more preferably 10% by mass or more, and is preferably 50% by mass or less, more preferably 30% by mass or less, and still more preferably 25% by mass or less.

When the acrylic resin (A1) has an acid group, the acid group may have been neutralized with a base. Owing to being neutralized with a base, the dispersion stability of the acrylic resin (A1) is good. In particular, from the viewpoint of dispersion stability, when the acrylic resin (A1) is in the form of an emulsion, the acrylic resin (A1) preferably has been neutralized with a base such that the pH of the emulsion is 5 to 10. Examples of the base include tertiary amines such as dimethanolamine and triethylamine.

The content of the acrylic resin (A1) in the solid content of the base coating composition is preferably 15% by mass or more, and more preferably 20% by mass or more, and is preferably 97% by mass or less, more preferably 80% by mass or less, and still more preferably 70% by mass or less. The content of the acrylic resin (A1) in the coating film-forming resin (A) is preferably 15% by mass or more, and more preferably 20% by mass or more, and is preferably 97% by mass or less, more preferably 80% by mass or less, and still more preferably 60% by mass or less.

In the present specification, the solid content of the composition represents a portion obtained by excluding a solvent such as an aqueous medium from the composition.

The acrylic resin (A1) can be produced by polymerizing the monomer mixture, and preferably can be produced by subjecting the monomer mixture to emulsion polymerization. Specifically, the polymerization can be carried out by mixing an emulsifier in an aqueous medium, and then dropping the monomer mixture and a polymerization initiator under heating and stirring. The monomer mixture, the emulsifier, and water may be emulsified in advance and added dropwise to the aqueous medium. As the aqueous medium, a compound recited as an example of the aqueous medium (C) described later can be appropriately used.

Examples of the polymerization initiator include lipophilic azo compounds such as azobisisobutyronitrile, 2,2'-azobis(2-methylbutyronitrile, and 2,2'-azobis(2,4-dimethylvaleronitrile); hydrophilic azo compounds such as 4,4'-azo-bis(4-cyanovaleric acid) and 2,2-azobis(N-(2-carboxyethyl)-2-methylpropionamidine, which are anionic, and 2,2'-azo-bis(2-methylpropionamidine), which is cationic; redox-type lipophilic peroxides such as benzoyl peroxide, parachlorobenzoyl peroxide, lauroyl peroxide, and t-butyl perbenzoate; and hydrophilic peroxides such as potassium persulfate and ammonium persulfate.

In general, the amount of the polymerization initiator is preferably 0.1 to 5% by mass and more preferably 0.2 to 2% by mass based on 100 mass parts in total of the monomer mixture.

As the emulsifier, an emulsifier commonly used by those skilled in the art can be used, and a reactive emulsifier is preferably used. Examples of the reactive emulsifier include Antox MS-60 (manufactured by Nippon Nyukazai Co., Ltd.), Eleminol JS-2 (manufactured by Sanyo Chemical Industries, Ltd.), ADEKA REASOAP NE-20 (manufactured by ADEKA Corporation), and Aqualon HS-10 (manufactured by DKS Co. Ltd.).

During the polymerization, a chain transfer agent may coexist. Examples of the chain transfer agent include mercaptan compounds such as lauryl mercaptan, and α-methylstyrene dimer.

The polymerization temperature is, for example, 30 to 90°C, preferably 60 to 90°C when an azo initiator is used, and preferably 30 to 70 when a redox initiator is used. The reaction time is, for example, 1 to 8 hours.

The polymerization reaction may be either one-stage polymerization or multi-stage polymerization. The multi-stage polymerization may be carried out in two stages, for example. Two-stage polymerization is a polymerization method in which a part of the above α,β-ethylenically unsaturated monomer mixture (monomer mixture 1) is first emulsion-polymerized, and the remainder of the above α,β-ethylenically unsaturated monomer mixture (monomer mixture 2) is further added, and followed by carrying out emulsion polymerization.

For example, in the case of performing two-stage polymerization, it is preferable from the viewpoint of compatibility with a clear coating film, and the like that the monomer mixture 1 contains an α,β-ethylenically unsaturated monomer having an amide group. At this time, it is more preferable that the monomer mixture 2 does not contain any α,β-ethylenically unsaturated monomer having an amide group. In addition, since an admixture of the monomer mixtures 1 and 2 is the above-described monomer mixture, the requirements of the above-described α,β-ethylenically unsaturated monomer mixture are satisfied by the admixture of the monomer mixtures 1 and 2.

The base coating composition contains a urethane resin (A2). Owing to containing the urethane resin (A2), the breaking energy of the base layer is increased and impact is easily absorbed.

The urethane resin (A2) is preferably a reaction product of a polyol with a polyisocyanate, and may be a reaction product obtained by further reacting a chain extender and/or an end terminator with the reaction product of the polyol with the polyisocyanate.

Examples of the polyol include a polymer polyol, a low molecular weight polyol (for example, a polyol having a molecular weight of less than 500), and a polyol having a hydrophilic group, and these may be used singly or two or more of them may be used in combination.

Examples of the polymer polyol include polyether polyol, polyester polyol, polycarbonate polyol, polybutadiene polyol, and polythioether polyol, and polyether polyol is preferable.

Examples of the polyether polyol include polyethylene glycol, polypropylene glycol, and polytetramethylene glycol.

Examples of the polyester polyol include a reaction product of a polycarboxylic acid with a polyester starting polyol; a ring-opening polymer of ε-caprolactone; and copolymers thereof. Examples of the polycarboxylic acid include adipic acid, sebacic acid, itaconic acid, maleic anhydride, phthalic acid, and isophthalic acid, and examples of the polyester starting polyol include ethylene glycol, diethylene glycol, triethylene glycol, propylene glycol, tripropylene glycol, butylene glycol, and neopentyl glycol.

The weight average molecular weight of the polymer polyol is, for example, 500 or more, preferably 700 or more, more preferably 1,000 or more, and is, for example, 10,000 or less, and preferably 7,000 or less. The number of functional groups (the number of hydroxy groups contained in one molecule) of the polymer polyol is 2 or more, preferably 4 or less, and more preferably 3 or less.

Examples of the low molecular weight polyol include bifunctional or tri- or more functional aliphatic diols such as ethylene glycol, propylene glycol, 1,4-butanediol, pentanediol, 3-methyl-1,5-pentanediol 1,6-hexanediol, diethylene glycol, glycerin, and trimethylolpropane.

Examples of the hydrophilic group in the polyol having a hydrophilic group include an anionic group such as an acid group, a cationic group such as an amino group, and a nonionic group such as a polyoxyalkylene group, and a polyol having an anionic group is preferable. Owing to a use of a polyol having a hydrophilic group, the dispersibility in water of a resulting urethane resin can be improved.

Examples of the polyol having an anionic group include known compounds (for example, the compounds described in JP-B-42-24192 and JP-B-55-41607), and specifically include dimethylolalkanoic acids such as dimethylolacetic acid, 2,2-dimethylolpropionic acid, and 2,2-dimethylolbutyric acid.

As the polyol having a cationic group, known compounds (for example, the compounds described in JP-B-43-0-76) can be used.

As the polyol having a nonionic group, known compounds (for example, the compounds described in JP-B-48-41718) can be used, and specifically, a polyol having a polyoxyalkylene unit, an alkyl alcohol-alkylene oxide adduct, and the like can be used.

The polyisocyanate is a compound having two or more isocyanate groups in one molecule, and examples of the polyisocyanate include aromatic polyisocyanates such as 2,4-tolylene diisocyanate, 2,6-tolylene diisocyanate, a mixture of 2,4-tolylene diisocyanate and 2,6-tolylene diisocyanate, diphenylmethane-4,4'-diisocyanate, diphenylmethane-2,4'-diisocyanate, a mixture of diphenylmethane-4,4'-diisocyanate and diphenylmethane-2,4'-diisocyanate, naphthalene-1,5-diisocyanate, 3,3'-dimethyl-4,4'-biphenylene diisocyanate, xylylene diisocyanate, diphenylmethylmethane diisocyanate, tetramethylxylylene diisocyanate, 4,4'-dibenzyl diisocyanate, and 1,3-phenylene diisocyanate; alicyclic polyisocyanates such as 1,3-cyclopentane diisocyanate, 1,4-cyclohexane diisocyanate, 1,2-cyclohexane diisocyanate, hydrogenated xylylene diisocyanate, dicyclohexylmethane diisocyanate, isophorone diisocyanate, norbornane diisocyanate, and isopropylidenecyclohexyl-4,4'-diisocyanate; aliphatic polyisocyanates such as tetramethylene diisocyanate, pentamethylene diisocyanate, hexamethylene diisocyanate, and trimethylhexamethylene diisocyanate; triisocyanates such as lysine ester triisocyanate, triphenylmethane triisocyanate, 1,6,11-undecane triisocyanate, 1,8-diisocyanate-4,4'-isocyanate methyloctane, 1,3,6-hexamethylene triisocyanate, and bicycloheptane triisocyanate; and multimers (for example, an adduct form, a biuret form, an isocyanurate form, a uretdione form, etc.) of the aromatic polyisocyanates, the alicyclic polyisocyanates, and the aliphatic polyisocyanates. Among them, aliphatic polyisocyanates, alicyclic polyisocyanates, and multimers of aliphatic polyisocyanates or alicyclic polyisocyanates are preferable from the viewpoint of light resistance.

The chain extender is just required to be a compound having two or more active hydrogen groups in one molecule, and examples thereof include low molecular weight polyols and polyamines as chain extenders.

Examples of the low molecular weight polyol as the chain extender include the same compounds as the low molecular weight polyol disclosed as examples of the polyol. Examples of the polyamine include ethylenediamine, hexamethylenediamine, diethylenetriamine, hydrazine, xylylenediamine, and isophoronediamine.

The end terminator is preferably a compound having one active hydrogen group in one molecule or a monoisocyanate compound.

The compound having one active hydrogen group in one molecule may be a monoalcohol or a monoamine. Examples of the monoalcohol include alkyl alcohols such as methanol, butanol, and octanol; and alkyl alcohol-alkylene oxide adducts. Examples of the monoamine include alkylamines such as butylamine and dibutylamine.

Examples of the monoisocyanate compound include aliphatic monoisocyanates such as methyl isocyanate, ethyl isocyanate, propyl isocyanate, butyl isocyanate, and lauryl isocyanate; alicyclic monoisocyanates such as cyclohexyl isocyanate; and aromatic monoisocyanates such as phenyl isocyanate and tolylene isocyanate.

The glass transition temperature of the urethane resin (A2) is preferably -50°C or lower, more preferably -55°C or lower, still more preferably -58°C or lower, and is, for example, -100°C or higher, preferably -90°C or higher. The glass transition temperature of the urethane resin (A2) can be measured by differential scanning calorimetry.

The urethane resin (A2) may be dispersed in a part of an aqueous medium (C) described later.

As the urethane resin (A2), commercially available products such as NeoRez Series (Kusumoto Chemicals, Ltd.), HUX Series (ADEKA Corporation), UCOAT Series, PERMARIN Series, and UPRENE Series (Sanyo Chemical Industries, Ltd.) may be used.

The content of the urethane resin (A2) is 0% by mass or more, preferably 3% by mass or more, more preferably 5% by mass or more, still more preferably 10% by mass or more, and preferably 80% by mass or less, more preferably 75% by mass or less in the coating material-forming resin (A) from the viewpoint of increasing the breaking energy of the base layer and absorbing impact.

The coating material-forming resin (A) may further contain a melamine resin (A3). The melamine resin (A3) acts as a curing agent in the coating film-forming resin (A). The melamine resin (A3) may be either soluble in water or insoluble in water.

The melamine resin (A3) preferably has a water tolerance of 3.0 or more. The water tolerance is an index for evaluating the degree of hydrophilicity, and the higher the water tolerance, the higher the hydrophilicity.

The water tolerance can be measured in an amount (mL) of ion-exchanged water dropped when 0.5 g of a sample is mixed with and dispersed in 10 mL of acetone at 25°C in a 100 mL beaker followed by dropping ion-exchanged water with a burette until cloudiness occurs.

As the melamine resin, alkyl etherified melamine resins, which have been alkyl etherified, are preferable, and melamine resins substituted with methoxy groups and/or butoxy groups are also preferable.

Examples of such melamine resins include those having only methoxy groups, such as CYMEL 325, CYMEL 327, CYMEL 370, and MYCOAT 723; those having both methoxy and butoxy groups, CYMEL 202, CYMEL 204, CYMEL 232, CYMEL 235, CYMEL 236, CYMEL 238, CYMEL 254, CYMEL 266, and CYMEL 267 (all trade names, manufactured by Allnex); and those having only butoxy groups, such as MYCOAT 506 (trade name, manufactured by Allnex), U-VAN 20N60, U-VAN 20SE (both trade names, manufactured by Mitsui Chemicals, Inc.). These may be used singly, or two or more of them may be used in combination.

From the viewpoint of increasing the breaking energy of the base layer and absorbing impact, the content of the melamine resin (A3) in the coating film-forming resin (A) is preferably less than 50% by mass, more preferably 35% by mass or less, and still more preferably 25% by mass or less, and the lower limit is 0% by mass. The mass ratio of the melamine resin (A3) to the urethane resin (A2) ((A3)/(A2)) is preferably less than 7, more preferably 5 or less, and still more preferably 3 or less, and is preferably 0.01 or more, more preferably 0.05 or more, and still more preferably 0.07 or more.

The total content of the acrylic resin (A1), the urethane resin (A2), and the melamine resin (A3) in the coating film-forming resin (A) is preferably 60% by mass or more, more preferably 70% by mass or more, and still more preferably 80% by mass or more, and the upper limit is 100% by mass.

The coating film-forming resin (A) may further contain another resin (A4) such as a polyester resin, a polyether resin, or a polycarbonate resin, as necessary.

Examples of the polyester resin include a reaction product of a polycarboxylic acid and a polyol; a ring-opening polymer of a lactone compound such as polycaprolactone; and copolymers thereof. Examples of the polycarboxylic acid include hydroxy acids such as adipic acid, sebacic acid, isophthalic acid, and dimethylolpropionic acid, and anhydrides thereof. Examples of the polyol include aliphatic polyols such as ethylene glycol, butanediol, neopentyl glycol, and trimethylolpropane. The solid acid value of the polyester resin is preferably 20 to 80 mg KOH/g, and the number average molecular weight of the polyester resin is preferably 1,000 to 15,000.

Examples of the polyether resin include polyether polyols having an oxyethylene unit having 2 to 6 (preferably 2 to 4) carbon atoms as a repeating unit, such as polyethylene glycol, polypropylene glycol, and polytetramethylene glycol, and copolymers thereof may be employed.

Examples of the polycarbonate resin include a reaction product of a polyhydric alcohol with phosgene and a transesterification product of a polyhydric alcohol with a carbonate compound.

Examples of the polyhydric alcohol include linear dihydric alcohols, branched dihydric alcohols, and tri- or more hydric alcohols.

Examples of the linear dihydric alcohol include 1,3-propanediol, 1,4-butanediol, 1,5-pentanediol, 1,6-hexanediol, 1,8-octanediol, 1,9-nonanediol, and 1,10-decanediol.

Examples of the branched dihydric alcohol include 2-methyl-1,3-propanediol, 3-methyl-1,5-pentanediol, neopentyl glycol, 2,2-diethyl-1,3-propanediol, 2-butyl-2-ethyl-1,3-propanediol, 2-methyl-1,8-octanediol, 2,2,4-trimethyl-1,3-pentanediol, 2-ethyl-1,3-hexanediol, 1,4-cyclohexanedimethanol, and tricyclodecane dimethanol.

Examples of the tri- or more hydric alcohol include glycerin, trimethylolethane, trimethylolpropane, a dimer of trimethylolpropane, and pentaerythritol.

The weight average molecular weight of the other resin is, for example, 500 to 10,000, preferably 1,000 to 10,000, and more preferably 2,000 to 6,000.

The content of the other resin in the coating film-forming resin (A) is, for example, 40% by mass or less, preferably 30% by mass or less, and more preferably 20% by mass or less, and may be 0% by mass or more, 5% by mass or more, or 10% by mass or more.

The coating film-forming resin (A) may further include another curing agent (A5). Examples of the other curing agent (A5) include blocked isocyanate compounds obtained by adding a blocking agent having active hydrogen to a polyisocyanate such as trimethylene diisocyanate, hexamethylene diisocyanate, xylylene diisocyanate, and isophorone diisocyanate; epoxy compounds; aziridine compounds; carbodiimide compounds; oxazoline compounds; and metal ions.

The coating film-forming resin (A) can be prepared by mixing the acrylic resin (A1), the urethane resin (A2), the melamine resin (A3) to be used as necessary, another resin (A4), and another curing agent (A5).

In the base coating composition that forms the base layer, the content of the coating film-forming resin (A) in the solid content of the base coating composition is preferably 55% by mass or more, more preferably 65% by mass or more, and still more preferably 70% by mass or more, and is preferably 95% by mass or less, more preferably 85% by mass or less, and still more preferably 80% by mass or less.

The pigment (B) contains the luster pigment (hereinafter, sometimes referred to as "luster pigment (B1)"), and preferably further contains a coloring pigment (B2).

The content of the luster pigment (B1) is preferably 0.1 parts by mass or more, more preferably 0.5 parts by mass or more, and still more preferably 1 part by mass or more, and is preferably 25 parts by mass or less, more preferably 20 parts by mass or less, and still more preferably 15 parts by mass or less based on 100 parts by mass of the coating film-forming resin (A).

The coloring pigment (B2) may be either an organic pigment or an inorganic pigment, or may be a mixture thereof.

Examples of the organic pigment include azo-chelate pigments, insoluble azo pigments, condensed azo pigments, diketopyrrolopyrrole pigments, phthalocyanine pigments, indigo pigments, perinone pigments, perylene pigments, dioxane pigments, quinacridone pigments, isoindolinone pigments, and metal complex pigments.

Examples of the inorganic pigment include chrome yellow, yellow iron oxide, red iron oxide, carbon black, and titanium dioxide.

Among them, as the coloring pigment (B2), phthalocyanine pigments, diketopyrrolopyrrole pigments, perylene pigments, and red iron oxide are preferable. By using these coloring pigments, a coating film superior in high chroma, high brightness, and deep feeling of color can be formed.

The content of the coloring pigment (B2) is preferably 0.1 parts by mass or more, more preferably 0.5 parts by mass or more, and still more preferably 1 part by mass or more, and is preferably 15 parts by mass or less, more preferably 10 parts by mass or less, and still more preferably 8 parts by mass or less based on 100 parts by mass of the coating film-forming resin (A).

In the base coating composition, when the luster pigment (B1) and the coloring pigment (B2) are contained, the mass ratio of the luster pigment (B1) to the coloring pigment (B2) ((B1)/(B2)) is preferably 0.8 or more, more preferably 1 or more, and still more preferably 1.2 or more, and is preferably 5 or less, more preferably 3 or less, and still more preferably 2 or less.

The pigment (B) may contain other pigments such as an extender pigment.

The content of the pigment (B) is preferably 0.2 parts by mass or more, more preferably 1 part by mass or more, still more preferably 2 parts by mass or more, and further preferably 3 parts by mass or more, and is preferably 35 parts by mass or less, more preferably 25 parts by mass or less, still more preferably 20 parts by mass or less, and further preferably 15 parts by mass or less based on 100 parts by mass of the coating film-forming resin (A).

The base coating composition preferably further contains an aqueous medium (C). Examples of the aqueous medium include water, hydrophilic solvents, and a mixture of water and a hydrophilic solvent; water or a mixture of water and a hydrophilic solvent are preferable.

Examples of the hydrophilic solvent include alcohol solvents such as methanol, ethanol, n-propanol, and 2-propanol; ketone solvents such as acetone and methyl ethyl ketone; polyhydric alcohol solvents such as ethylene glycol, diethylene glycol, propylene glycol, polyalkylene glycols, and glycerin; ether solvents such as ethylene glycol monobutyl ether, propylene glycol monomethyl ether, propylene glycol monoethyl ether, propylene glycol mono-n-propyl ether, and ethyl carbitol; and amide solvents such as N-methyl-2-pyrrolidone.

The content of water in the aqueous medium (C) is preferably 50% by mass or more, more preferably 60% by mass or more, and still more preferably 70% by mass or more, and the upper limit is 100% by mass.

The content of the aqueous medium (C) in the base coating composition is preferably 40% by mass or more, more preferably 50% by mass or more, still more preferably 55% by mass or more, and is preferably 90% by mass or less, more preferably 80% by mass or less, and still more preferably 85% by mass or less.

The base coating composition may further contain a pigment dispersant.

As the pigment dispersant, a resin having a pigment affinity moiety and a hydrophilic moiety can be used.

Examples of the pigment affinity moiety and the hydrophilic moiety include nonionic, cationic, and anionic functional groups according to the type of the pigment, and the pigment dispersant may have two or more such functional groups in one molecule thereof. Examples of the nonionic functional group include a hydroxy group, an amide group, and polyoxyalkylene groups, and examples of the cationic functional group include an amino group, an imino group, and a hydrazino group. Examples of the anionic functional group include a carboxyl group, a sulfonic acid group, and a phosphoric acid group.

Examples of the pigment dispersant include nonionic pigment dispersants and polymer pigment dispersants.

Examples of the nonionic pigment dispersant include dispersants having an alkyl chain having 14 or more carbon atoms, preferably 14 to 30 carbon atoms, and more preferably 16 to 25 carbon atoms. The hydrophilic-lipophilic balance (HLB) of the nonionic pigment dispersant is preferably 16 or more, more preferably 16 to 20, and still more preferably 17 to 19. Examples of the nonionic pigment dispersant include polyoxyethylene stearyl ether, polyoxyethylene oleyl ether, and polyoxyethylene 2-octyldodidecyl ether, and modified products thereof (e.g., sulfuric acid ester-, phosphoric acid ester-, or maleic acid ester-modified products).

The polymer pigment dispersant is not particularly limited, and those described below can be suitably used.

(1) Comb-structured polymer pigment dispersants having a pigment affinity group in the main chain and/or a plurality of side chains and having a plurality of side chains constituting a solvate moiety

(2) Polymer pigment dispersants having a plurality of pigment affinity moieties formed of pigment affinity groups in the main chain

(3) Linear polymer pigment dispersants having a pigment affinity moiety formed of a pigment affinity group at one end of the main chain

Herein, the pigment affinity group refers to a functional group having strong adsorptive ability to the surface of a pigment; examples thereof include, in an organosol, a tertiary amino group, a quaternary ammonium group, a heterocyclic group having a basic nitrogen atom, a hydroxy group, and a carboxyl group; and in a hydrosol, a phenyl group, a lauryl group, a stearyl group, a dodecyl group, and an oleyl group.

The comb-structured polymer pigment dispersant (1) is one having a structure in which a plurality of side chains constituting a solvate moiety are attached to the main chain together with the main chain and/or a plurality of side chains having the pigment affinity group with the side chains being attached to the main chain like comb teeth. In the present description, the above-described structure is referred to as a comb structure. In the comb-structured polymer pigment dispersant (1), there may be a plurality of the pigment affinity groups not only at a side-chain end, but also in the middle of a side chain or in the main chain. It is noted that the solvate moiety refers to a structure having affinity with a solvent. The solvate moiety is composed of, for example, a water-soluble polymer chain, a lipophilic polymer chain, or the like.

The comb-structured polymer pigment dispersant (1) is not particularly limited, and examples thereof include a polymer composed of poly(ethylenimine) or its acid salt with a structure that has one or more poly(carbonyl-carbonyl-C3 to C6-alkyleneoxy) chains, and where each of these chains has 3 to 80 carbonyl-C3 to C6-alkyleneoxy groups, and that is bound to poly(ethylenimine) with amide or a salt cross-linked group disclosed in JP-A-5-177123; a polymer that is composed of a reactive product of poly(lower alkylene)imine and polyester having an isolated carboxylic acid group, and where at least two polyester closed-chains are bound to each poly(lower alkylene)imine closed-chain disclosed in JP-A-54-37082; a pigment dispersant that is obtained by reacting an amine compound and a pre-polymer containing a carboxyl group with 300 to 7000 of number average molecular weight to a high-molecular-weight epoxy compound having an epoxy group at the terminal simultaneously or in optional sequence disclosed in JP-B-7-24746.

The number of the pigment affinity groups contained in one molecule of the comb-structured polymer pigment dispersant (1) is preferably 2 or more, and more preferably 25 or more from the viewpoint of dispersion stability, and is preferably 3,000 or less, and more preferably 1,500 or less from the viewpoint of the viscosity of the base coating composition or the pigment dispersion described later.

The number of the side chains constituting the solvate moiety contained in one molecule of the comb-structured polymer pigment dispersant (1) is preferably 2 or more, and more preferably 5 or more from the viewpoint of dispersion stability, and is preferably 1,000 or less, and more preferably 500 or less from the viewpoint of the viscosity of the base coating composition or the pigment dispersion described later.

The number average molecular weight of the comb-structured polymer pigment dispersant (1) is preferably 2,000 or more, and more preferably 4,000 or more from the viewpoint of dispersion stability, and is preferably 1,000,000 or less, and more preferably 500,000 or less from the viewpoint of the viscosity of the base coating composition or the pigment dispersion described later.

The polymer pigment dispersant (2) having, in the main chain, a plurality of pigment affinity moieties formed of pigment affinity groups is one in which a plurality of the pigment affinity groups are disposed along the main chain and the pigment affinity groups are attached to the main chain like pendants, for example. In the present description, the above-mentioned pigment affinity moiety refers to a moiety that functions as an anchor that adsorbs to the surface of a pigment while having one or more of the above-mentioned pigment affinity groups.

Examples of the above-described polymer pigment dispersant (2) include a reaction product of a polyisocyanate with a mixture of a monohydroxy compound and a monohydroxy monocarboxylic acid or a monoamino monocarboxylic acid compound, and a compound having at least one basic ring nitrogen and an isocyanate reactive group disclosed in JP-A-4-210220; a polymer where a plurality of tertiary amino groups or groups having a basic cyclic nitrogen atom are attached to a main chain composed of polyurethane/polyurea disclosed in JP-A-60-16631, JP-A-2-612, and JP-A-63-241018; copolymer that is a copolymer composed of a steric stabilization unit having a water-soluble poly (oxyalkylene) chain, a structure unit and an amino group-containing unit, and where the amine group-containing single dose monomer unit contains a tertiary amino group or a group of its acid addition salt or a group of quaternary ammonium, and that contains an amino group in an amount of 0.025 to 0.5 milli-equivalent per gram of the copolymer disclosed in JP-A-1-279919; and an amphipathic polymer that is an amphipathic polymer composed of a main chain made from an addition polymer and a stabilization unit made from at least one C1-C4 alkoxypolyethylene or polyethylene-copropylene glycol (meth)acrylate, and, having a mass average molecular weight of 2500 to 20000, wherein the main chain contains up to 30% by mass of a nonfunctional structure unit and a total of up to 70 % by mass of a stabilizer unit and a functional unit; the functional unit is substituted or unsubstituted styrene-containing unit, a hydroxy group unit and a carboxyl group-containing unit; and ratios of a hydroxy group to a carboxyl group, a hydroxy group to a styrene group and a hydroxy group to a propyleneoxy group or an ethyleneoxy group are 1 : 0.10 to 26.1, 1 : 0.28 to 25.0, and 1 : 0.80 to 66.1, respectively, disclosed in JP-A-6-100642.

The number of the pigment affinity groups contained in one molecule of the polymer pigment dispersant (2) is preferably 2 or more, and more preferably 25 or more from the viewpoint of dispersion stability, and is preferably 3,000 or less, and more preferably 1,500 or less from the viewpoint of the viscosity and the chroma of the base coating composition or the pigment dispersion described later.

The number average molecular weight of the polymer pigment dispersant (2) is preferably 2,000 or more, and more preferably 4,000 or more from the viewpoint of dispersion stability, and is preferably 1,000,000 or less, and more preferably 500,000 or less from the viewpoint of the viscosity of the base coating composition or the pigment dispersion described later.

The linear polymer pigment dispersant (3) having a pigment affinity moiety formed of a pigment affinity group at one end of the main chain has a pigment affinity moiety composed of one or two or more pigment affinity groups only at one end of the main chain, and has sufficient affinity to a pigment surface.

The linear polymer pigment dispersant (3) is not particularly limited, and examples thereof include an A-B block type polymer where one is basic, disclosed in JP-A-46-7294; an A-B block type polymer where an aromatic carboxylic acid is introduced into an A block, disclosed in the specification of US Pat. No. 4,656,226; an A-B block type polymer where one end is a basic functional group, disclosed in the specification of US Pat. No. 4,032,698; an A-B block type polymer where one end is an acidic functional group, disclosed in the specification of US Pat. No. 4,070,388; and one where weathering and yellowing deterioration of the A-B block type polymer, where an aromatic carboxylic acid is introduced into an A block, described in the specification of US Pat. No. 4,656,226 has been improved as disclosed in JP-A-1-204914.

The number of the pigment affinity groups contained in one molecule of the linear polymer pigment dispersant (3) is preferably 2 or more, and more preferably 5 or more from the viewpoint of dispersion stability, and is preferably 3,000 or less, and more preferably 1,500 or less from the viewpoint of the viscosity of the base coating composition or the pigment dispersion described later.

The number average molecular weight of the linear polymer pigment dispersant (3) is preferably 1,000 or more, and more preferably 2,000 or more from the viewpoint of dispersion stability, and is preferably 1,000,000 or less, and more preferably 500,000 or less from the viewpoint of the viscosity of the base coating composition or the pigment dispersion described later.

As the pigment dispersant, the comb-structured polymer pigment dispersant (1) is more preferable from the viewpoint of the transparency, etc. of a resulting coating film.

As the pigment dispersant, a commercially available product can also be used. Examples of the commercially available product include the following.

Dispex Ultra FA4404, Dispex Ultra FA4416, Dispex Ultra FA4425, Dispex Ultra FA4431, Dispex Ultra FA4437, Dispex Ultra FA4480, Dispex Ultra FA4483, Dispex Ultra PA4550, Dispex Ultra PA4560, Dispex Ultra PX4575, Dispex Ultra PX4585(all manufactured by BASF).

TEGO Dispers 650, TEGO Dispers 651, TEGO Dispers 652, TEGO Dispers 655, TEGO Dispers 660C, TEGO Dispers 715W, TEGO Dispers 740W, TEGO Dispers 750W, TEGO Dispers 752W, TEGO Dispers 755W, TEGO Dispers 760W (all manufactured by Evonik).

Solsperse 12000S, Solsperse 20000, Solsperse 27000, Solsperse 40000, Solsperse 41090, Solsperse 43000, Solsperse 44000, Solsperse 45000, Solsperse 46000, Solsperse 47000, Solsperse 53095, Solsperse 64000, Solsperse 65000, Solsperse 66000, Solsperse 67000, Solsperse WV400(all manufactured by Lubrizol).

Floren G-700AMP, Floren G-700DMEA, Floren GW-1500, and Floren GW-1640 (all manufactured by Kyoeisha Chemical Co., Ltd.).

DISPARLON DA-703-50, DISPARLON DA-7301, and DISPARLON DN-900 (all manufactured by Kusumoto Chemicals, Ltd.).

ANTI-TERRA-250, DISPERBYK, DISPERBYK-102, DISPERBYK-180, DISPERBYK-184, DISPERBYK-185, DISPERBYK-187, DISPERBYK-190, DISPERBYK-191, DISPERBYK-192, DISPERBYK-193, DISPERBYK-194N, DISPERBYK-198, DISPERBYK-199, DISPERBYK-2010, DISPERBYK-2012, DISPERBYK-2013, DISPERBYK-2015, DISPERBYK-2096(all manufactured by BYK).

As the pigment dispersion, one dispersion may be used, or two or more dispersions may be used in combination.

The amount (amount of solid) of the pigment dispersant is preferably 50 to 300 parts by mass, and more preferably 65 to 250 parts by mass based on 100 parts by mass of the pigment (B). When the amount of the pigment dispersant is in the above range, it is easy to obtain good pigment dispersion stability and good coating film properties.

The base coating composition may further contain additives used in the coating material field such as a surface conditioning agent, an antioxidant, an ultraviolet absorber, an antifoaming agent, a viscosity controlling agent, and a surfactant, as necessary.

Containing the viscosity controlling agent enables to prevent conformability between coating films and to secure coating workability. As the viscosity controlling agent, a viscosity controlling agent that exhibits a thixotropic property can be commonly used. Specifically, examples of the viscosity controlling agent include crosslinked or non-crosslinked resin particles; polyamide-based viscosity controlling agents such as a swelling dispersion of aliphatic acid amide, amide-based aliphatic acid, and phosphates of long-chain polyaminoamide; polyethylene-based viscosity controlling agents such as a colloidal swelling dispersion of polyethylene oxide; organic bentonite-based viscosity controlling agents such as organic acid smectite clay and montmorillonite; inorganic pigments such as aluminum silicate and barium sulfate; and flat pigments capable of developing viscosity depending on the shape of the pigment.

A base coating composition can be produced by stirring and mixing the coating film-forming resin (A), the pigment (B), the aqueous medium (C), and a pigment dispersant and additives to be used as necessary.

Prior to the production of the base coating composition, the coating film-forming resin (A) may be processed to form a dispersion in which it is dispersed in at least a part of the aqueous medium (C), and then is subjected to the preparation of the base coating composition. When the coating film-forming resin (A) is present in the form of an emulsion or a dispersion, it is possible to form a dispersion in which the coating film-forming resin (A) is dispersed in at least a part of the aqueous medium (C) by sequentially mixing and stirring them.

The proportion of the solid in the base coating composition is preferably 10% by mass or more, more preferably 15% by mass or more, and still more preferably 20% by mass or more, and is preferably 60% by mass or less, more preferably 50% by mass or less, and still more preferably 55% by mass or less.

In addition, the pigment (B) may be dispersed together with at least a part of the aqueous medium (C) and a pigment dispersion to form a pigment dispersion and then subjected to the preparation of the base coating composition. The pigment dispersion can be prepared by mixing and dispersing the pigment (B) and the pigment dispersant in the aqueous medium.

The coloring pigment dispersion can be prepared by mixing and dispersing the pigment (B), the aqueous medium (C), and the pigment dispersant.

The mixing of the pigment (B), the aqueous medium (C), and the pigment dispersant can be carried out using, for example, a medium dispersing machine or the like. The medium dispersing machine is not particularly limited, and examples thereof include Ultra Apex Mill, Dual Apex Mill (trade names of Kotobuki Industries Co., Ltd.), Paint Shaker, Pico Grain Mill, Eco Mill (trade names of Asada Iron Works, Co., Ltd.), Star Mill ZRS, Star Mill, Nano Getter, Max Nano Getter (trade names of Ashizawa Finetech Ltd.), Micromedia (trade names of Bühler AG), MSC Mill (trade name of Nippon Coke & Engineering Co., Ltd.), NPM (Shinmaru Enterprises Corporation), and Sand Mill.

As a dispersion medium that can be used in the mixing and dispersion using a medium dispersing machine, for example, a dispersion medium having a particle size of 0.3 mm or less, more preferably 0.1 mm or less, and even more preferably 0.05 mm or less can be used. A dispersion medium having a particle size of 0.05 mm or less is also referred to as an ultrafine medium, and can be particularly suitably used in the preparation of the pigment dispersion (ii) in the present invention. The lower limit of the particle size of the dispersion medium is preferably 0.03 mm, and more preferably 0.05 mm, from the viewpoint of the progress of mixing and dispersion.

In the mixing and dispersion using a medium dispersing machine, the medium loading in the dispersing machine is preferably 50% by volume, more preferably 60% by volume or more, and even more preferably 70% by volume or more relative to the volume of the dispersing machine.

The material of the dispersion medium particles is not particularly limited, and examples thereof include alumina, zirconia, silicon carbide, silicon nitride, glass, steel, stainless steel, and pottery. The material of the dispersion medium particles is preferably zirconia from the viewpoint of dispersion efficiency, and the like.

The rotation speed of the agitator of the medium dispersing machine is preferably 500 rpm or more, more preferably 1,000 rpm or more, and even more preferably 1,500 rpm or more. The upper limit of the rotation speed is preferably 5,000 rpm or less.

The medium dispersing machine may have a separator unit, if necessary. When the medium dispersing machine has a separator unit, the dispersion medium particles can be well separated. The separator unit may have, for example, a rotation shaft. When the separator unit has a rotation shaft, the dispersion medium particles can be separated by rotation (for example, centrifugal separation). In this case, the rotation speed of the rotation shaft of the separator can be appropriately chosen depending on the viscosity of the contents. The rotation speed may be, for example, 2,000 rpm or more, more preferably 3,000 rpm or more, and even more preferably 4,000 rpm or more.

Although the mixing and dispersing time by the medium dispersing machine varies depending on the scale, and the like, for example, the residence time in the dispersing machine is preferably 30 to 200 minutes, and more preferably 60 to 150 minutes. As to the mixing and dispersing temperature, the mixing and dispersion may be carried out, for example, under the condition of 5 to 45°C, and more preferably carried out under the condition of 20 to 40°C.

The content of the solid in the base coating composition is preferably 10% by mass or more, more preferably 15% by mass or more, and still more preferably 20% by mass or more, and is preferably 60% by mass or less, more preferably 50% by mass or less, and still more preferably 40% by mass or less.

The base layer can be formed, for example, by applying the base coating composition to form a coating film, and heat-curing the coating film. When the base layer has, for example, a plurality of layers including a first base layer and a second base layer, the base layer may be formed by applying a first base coating composition, heat-curing the coating film, applying a second base coating material onto the cured first base layer, and heat-curing the coating film; or the base layer may be formed by applying a first base coating composition, applying a second base coating composition without heat-curing the coating film, and curing the first base coating film and the second base coating film together. At this time, drying or preheating may, as necessary, be carried out after applying the first base coating composition and before applying the second base coating composition on the coating film.

Furthermore, the base coating film (a top layer in the case of a plurality of layers) may be heat-cured before forming a layer (a clear layer or the like) thereon, or a clear coating composition described later may be applied to an uncured base coating film (in particular, a top coating film) without the uncured base coating film being heat-cured. At this time, drying or preheating may, as necessary, be carried out after applying the base coating composition (particularly, the coating composition of the top layer) and before applying the clear coating composition.

The base coating composition (including a plurality of layers of a first base coating composition, a second base coating composition, etc.) can be applied, for example, by multi-stage coating, preferably two-stage coating, using air electrostatic spray coating, or by a combination of air electrostatic spray coating and a rotary atomization type electrostatic applicator.

The clear layer is a layer located on a surface side with respect to the base layer in the multi-layer coating film, and is preferably an outermost surface layer of the multi-layer coating film.

The resin to form the clear layer is not particularly limited, and examples thereof include such resins as an acrylic resin, a polyester resin, a urethane resin, and an epoxy resin, and the resin may be one curable in combination with a curing agent having an isocyanate group or an epoxy group (sometimes referred to as an "isocyanate curing agent" and an "epoxy curing agent", respectively).

The thickness of the clear layer is preferably 10 $\mu$m or more, and more preferably 20 $\mu$m or more from the viewpoint of securing the strength of the film itself, and is preferably 80 $\mu$m or less, and more preferably 60 $\mu$m or less from the viewpoint of controlling defects such as bubbles or sagging during coating.

The clear layer can be formed as a cured product of a clear coating composition including, for example, a resin such as an acrylic resin, a polyester resin, a urethane resin, or an epoxy resin, and a curing agent having an isocyanate group, an epoxy group, or the like. The clear coating composition may be any of a solvent type, an aqueous type, and a powder type.

From the viewpoint of transparency, resistance to acid etching, and the like, preferable examples of the solvent type clear coating composition include a composition including a solvent and a combination of an acrylic resin and/or a polyester resin with an amino resin and/or an isocyanate curing agent or an acrylic resin and/or a polyester resin having a carboxylic acid/epoxy curing system.

Examples of the aqueous clear coating composition include a composition including an aqueous medium and a resin obtained by subjecting a resin used for the above-described solvent-type clear coating composition to neutralization with a base such as a tertiary amine (for example, dimethylethanolamine and triethylamine) to make the resin aqueous. As the aqueous medium, the compounds recited as examples of the aqueous medium (C) used for the base coating composition can be appropriately used.

The solvent-type clear coating composition and the aqueous clear coating composition each preferably contain the viscosity controlling agent in order to secure coating workability.

As the powder type clear coating composition, for example, a powder coating composition commonly used in the coating material field can be used, such as a thermoplastic powder coating composition and a thermosetting powder coating composition. Among them, from the viewpoint of physical properties of a coating film, thermosetting powder coating compositions of an epoxy type, an acrylic type, a polyester type, and the like are preferable.

The application of the clear coating composition can be carried out using an application method according to the mode of application of the clear coating composition to be used.

By heat-curing an uncured clear coating film resulting from the application of the clear coating composition, a clear layer can be formed. When the clear coating composition has been applied onto an uncured base layer (especially, a second base layer), both the uncured coating films are to be heat-cured. From the viewpoint of curability and physical properties of a resulting multi-layer coating film, the heat-curing temperature is preferably 80 to 180°C, and more preferably 120 to 160°C, and the heat-curing time may be arbitrarily set, but for example, when the heat-curing temperature is 120 to 160°C, it is preferably 10 to 30 minutes.

In the formation of a multi-layer coating film, examples of methods for forming a first base coating film, a second base coating film, and an optional clear coating film include the following methods.

(1) A method in which the first base coating composition is applied to form an uncured first base coating film, then the second base coating composition is applied to form an uncured second base coating film, then the clear coating composition is applied to form an uncured clear coating film, and the resulting three layers are heat-cured at once.
(2) A method in which the first base coating composition is applied to form an uncured first base coating film, then the second base coating composition is applied to form an uncured second base coating film, and then the resulting two layers are heat-cured at the same time. After the heat-curing, a clear coating film may be provided, if necessary.
(3) A method in which the first base coating composition is applied to form an uncured first base coating film, then the clear coating composition is applied to form an uncured clear coating film, then the resulting two layers are heat-cured at once,
then the second base coating composition is applied to form an uncured second base coating film, then the clear coating composition is applied to form an uncured clear coating film, and then the resulting two layers are heat-cured at the same time.

The multi-layer coating film may further include another layer such as a chipping primer layer in addition to the substrate, the base layer, and the clear layer. The other layer may be present at any position, such as between the substrate and the base layer or between the base layer and the clear layer.

The multi-layer coating film is superior in designability, and for example, the flip-flop value (hereinafter sometimes referred to as "FF value") is preferably 1.2 or more. The flip-flop value of the multi-layer coating film is preferably 1.4 or more, and more preferably 1.5 or more, and may be, for example, 2 or less. The larger the FF value, the higher the flip-flop property.

In the present invention, "the flip-flop property is high" represents a state described as follows: when a coating film is visually observed, it looks white from the front direction (perpendicularly to the coating film surface), and it glitters to be superior in sparkle texture, while observed from an oblique direction, the sparkle texture is weak and the hue is clearly visible, and the difference in brightness between the two observations is large.

The thickness of the multi-layer coating film is preferably 20 $\mu$m or more, and more preferably 30 $\mu$m or more from the viewpoint of securing the strength of the film itself, and is preferably 300 $\mu$m or less, and more preferably 250 $\mu$m or less from the viewpoint of maintaining film physical properties in a cooling/heating cycle or the like.

The multi-layer coating film of the present invention can achieve both designability and chipping resistance, and can be suitably used for coating of automobile bodies and the like.

EXAMPLES

The present invention will be described hereafter in more detail by way of examples, to which the present invention is not intended to be limited.

Production Example 1 Production of acrylic resin emulsion (coating film-forming resin)

126.5 parts by mass of deionized water was added to a reaction vessel, and was heated to 80°C while being mixed and stirred in a nitrogen stream. Subsequently, monomer emulsion composed of100 parts by mass of a monomer mixture of 27.61 parts by mass of methyl acrylate, 53.04 parts by mass of ethyl acrylate, 4.00 parts by mass of styrene, 9.28 parts by mass of 2-hydroxyethyl methacrylate, 3.07 parts by mass of methacrylic acid, and 3.00 parts by mass of allyl methacrylate, a monomer emulsion composed of 0.7 parts by mass of Aqualon HS-10 (polyoxyethylene alkylpropenylphenyl ether sulfate, produced by DKS Co. Ltd.), 0.5 parts by mass of ADEKA REASOAP NE-20 ($\alpha$-[1-[(allyloxy)methyl]-2-(nonylphenoxy)ethyl]-$\omega$-hydroxyoxyethylene, produced by ADEKA Corporation), and 80 parts by mass of deionized water, and an initiator solution composed of 0.3 parts by mass of ammonium persulfate and 10 parts by mass of deionized water were dropped in parallel into the reaction vessel over 2 hours. After the completion of the dropping, aging was carried out at that temperature for 2 hours. Subsequently, the mixture was cooled to 40°C and filtered through a 400 mesh filter, and then 70 parts by mass of deionized water and 0.32 parts by mass of dimethylaminoethanol were added to adjust to pH 6.5, and thus a single-layer acrylic resin emulsion 1 having an average particle size of 88 nm, a nonvolatile content of 25% by mass, a solid acid value of 20 mg KOH/g, and a hydroxyl value of 40 mg KOH/g was obtained.

Production Example 2 Production of water-soluble acrylic resin

23.89 parts by mass of tripropylene glycol methyl ether and 16.11 parts by mass of propylene glycol methyl ether were added to a reaction vessel, and the mixture was heated to 105°C while being mixed and stirred in a nitrogen stream. Subsequently, a monomer mixture of 13.1 parts by mass of methyl methacrylate, 68.4 parts by mass of ethyl acrylate, 11.6 parts by mass of 2-hydroxyethyl methacrylate, and 6.9 parts by mass of methacrylic acid was prepared, and 100 parts by mass of the monomer mixture and an initiator solution composed of 10.0 parts by mass of tripropylene glycol methyl ether and 1 part by mass of tert-butyl peroxy-2-ethylhexanoate were dropped in parallel into the reaction vessel over 3 hours. After the completion of the dropping, aging was carried out at that temperature for 0.5 hours.
Furthermore, an initiator solution composed of 5.0 parts by mass of tripropylene glycol methyl ether and 0.3 parts by mass of tert-butyl peroxy-2-ethylhexanoate was dropped into the reaction vessel over 0.5 hours. After the completion of the dropping, aging was carried out at that temperature for 2 hours.
After removing 16.1 parts by mass of the solvent at 110°C under reduced pressure (70 torr) with a desolvating apparatus, 204 parts by mass of deionized water and 7.1 parts by mass of dimethylaminoethanol were added to obtain a water-soluble acrylic resin solution. The water-soluble acrylic resin solution obtained had a nonvolatile content of 30% by mass, a solid acid value of 40 mg KOH/g, a hydroxyl value of 50 mg KOH/g, and a viscosity of 140 poise (E-type viscometer, 1 rpm/25°C).

Production Example 3 Production of phosphoric acid group-containing organic compound

In a 1-liter reaction vessel equipped with a stirrer, a thermostat, and a cooling tube, 40 parts by mass of ethoxypropanol was charged, into which 121.7 parts by mass of a monomer solution composed of 4 parts by mass of styrene, 35.96 parts by mass of n-butyl acrylate, 18.45 parts by mass of ethylhexyl methacrylate, 13.92 parts by mass of 2-hydroxyethyl methacrylate, 7.67 parts by mass of methacrylic acid, and 40 parts by mass of a solution obtained by dissolving 20 parts by mass of Phosmer PP (acid phosphooxyhexa(oxypropylene) monomethacrylate manufactured by Uni-Chemical Co., Ltd.) in 20 parts of ethoxypropanol, and 1.7 parts by mass of azobisisobutyronitrile was dropped at 120°C over 3 hours, followed by continuous stirring for 1 hour. The obtained phosphoric acid group-containing organic compound had an acid value of 105 mg KOH/g, including a phosphoric acid group value of 55 mg KOH/g, a hydroxyl value of 60 mg KOH/g, a number average molecular weight of 6,000, and a nonvolatile content of 63% by mass.

Example 1

Production of first base coating composition (first aqueous luster base coating composition)

As the acrylic resin emulsion (A1-1), 182 parts by mass of the acrylic resin emulsion of Production Example 1, 2.2 parts by mass of dimethylaminoethanol as a base, 40 parts by mass of CYMEL 327 (mixed alkylated melamine resin, manufactured by Allnex, solid content: 90% by mass) as the melamine resin (A3), 10 parts by mass (10 parts by mass based on 100 parts by mass of resin solid content) of LG neoExtra White #325 (scaly vapor-deposited metal pigment, manufactured by OIKE & Co., Ltd., average particle size (average major axis): 35 μm, active ingredient content: 100% by mass) as the luster pigment (B1), 5 parts by mass of the phosphoric acid group-containing organic compound of Production Example 3 as a pigment dispersant, 0.4 parts by mass of lauryl acid phosphate, 50 parts by mass of butyl cellosolve as a hydrophilic solvent, 5.5 parts by mass (3 parts by mass in terms of solid content) of NOIGEN EA-207D (amphipathic compound, manufactured by DKS Co. Ltd., number average molecular weight: 4,200, solid content: 55% by mass), 3 parts by mass of linoleic acid (manufactured by Kishida Chemical Co., Ltd.), and 1.0 parts by mass of ADEKA NOL UH-814N (urethane association type thickening agent, active ingredient content: 30% by mass, manufactured by ADEKA CORPORATION, trade name) as a viscosity modifier were uniformly dispersed, diethanolamine was added such that pH became 8.1, and the mixture was diluted with deionized water. Thus, an aqueous coating composition having a resin solid concentration of 33% by mass was prepared.

Production of second base coating composition (second aqueous coloring base coating composition)

As the acrylic resin emulsion (A1-1), 44.9 parts by mass of the acrylic resin emulsion obtained in Production Example 1,10 parts by mass of a 10% by mass aqueous dimethylaminoethanol solution as a base, 10.1 parts by mass of the water-soluble acrylic resin of Production Example 2 (resin solid content: 30% by mass), 31.2 parts by mass of "NeoRez R-9603" (polycarbonate-based urethane emulsion resin, nonvolatile content: 33% by mass) manufactured by Avecia as the urethane resin (A2), 8.8 parts by mass of CYMEL 204 (mixed alkylated melamine resin manufactured by Allnex, solid content: 80% by mass, water tolerance: 3.6 ml) as the melamine resin (A3), 5 parts by mass of Prime Pole PX-1000 (bifunctional polyether polyol manufactured by Sanyo Chemical Industries, Ltd.) as the other resin (A4), 15 parts by mass of Cyanine Blue (CYANINE BLUE G-314 manufactured by Sanyo Color Works, Ltd.), which is the coloring pigment (B2), as a coloring pigment dispersion, 30 parts by mass of Disperbyk 190 as a pigment dispersant, 54.5 parts by mass of ion-exchanged water, and 0.5 parts by mass of BYK-0 11 as an antifoaming agent were mixed with a stirrer such as a disper, and then dispersed with a disperser filled with 0.05 mm zirconia beads as a medium in a volume packing ratio of 70%. Then, 10.16 parts by mass of the resulting paste was mixed to afford an aqueous coloring base coating composition having 4% by mass of PWC based on 100 parts by mass of the resin solid content.

Production of multi-layer coating film

<Method for forming multi-layer coating film>

A coated sheet was prepared by applying electrodeposition coating with a cationic electrodeposition coating material "Power Top U-50" produced by Nippon Paint Co., Ltd. to a zinc phosphate-treated dull steel sheet with a thickness of 0.8 mm, a length of 30 cm, and a width of 40 cm such that a dry film thickness would be 20 $\mu$m and then baking at 160°C for 30 minutes. Then, a gray intermediate coating material "Olga OP-30" (a polyester melamine-based coating material produced by Nippon Paint Co., Ltd.) diluted to have a discharge time of 25 seconds as measured at 20°C using a No. 4 Ford cup was applied to that coated sheet in two stages with an air spray such that a dry film thickness would be 35 $\mu$m, and then baked at 140°C for 30 minutes.

After cooling, the first aqueous luster base coating material of the preceding Production Example was applied in two stages with a "Cartridge Bell" at a room temperature of 23°C and a humidity of 68% such that the dry film thickness would be 5 $\mu$m. An interval setting of 1 minute 30 seconds was performed between the two applications. After the second application, setting was performed at an interval of 1 minute and 30 seconds. Thereafter, preheating was performed at 80°C for 5 minutes to form an uncured first base coating film.

Onto the resulting uncured first base coating film, the aqueous coloring base coating compositions obtained in the examples and the comparative examples were applied in two stages with a "Cartridge Bell" at a room temperature of 23°C and a humidity of 68% such that the dry thickness would be 10 $\mu$m. An interval setting of 1 minute 30 seconds was performed between the two applications. After the second application, setting was performed at an interval of 1 minute and 30 seconds. Thereafter, preheating was performed at 80°C for 5 minutes to form an uncured second base coating film.

Subsequently, the resulting coated sheet was allowed to cool to room temperature, and then MACFLOW O-1810 (a solvent-type clear coating material, produced by Nippon Paint Co., Ltd.) was applied as a clear coating material in one stage such that the dry thickness would be 35 $\mu$m, followed by setting for 7 minutes. Subsequently, the coated sheet was baked at 140°C for 30 minutes in a dryer, affording a multi-layer coating film. In all the cases, the coating film appearance was good.

Example 2, Comparative Example 1

A multi-layer coating film was formed in the same manner as in Example 1 except that the acrylic resin (A1), the urethane resin (A2), and the melamine resin (A3) were changed as shown in Table 1 in Example 1.

Examples 3 to 11, Comparative Examples 2 to 4

A multi-layer coating film was formed in the same manner as in Example 1 except that the acrylic resin (A1), the urethane resin (A2), and the melamine resin (A3) were changed as shown in Table 1 and the gray intermediate coating material "Olga OP-30" (a polyester-melamine-based coating material manufactured by Nippon Paint Co., Ltd.) was not applied in Example 1.

The multi-layer coating films obtained in the above Examples and Comparative Examples were subjected to the following evaluations.

[Measurement of erosion rate by MSE method]

An aqueous dispersion containing polygonal alumina having an average particle size D50 of 1.2 $\mu$m in a

proportion of 3% by mass was projected at room temperature (25°C) and an atmospheric pressure (1013 hPa) using a nozzle having a caliber of 1 mm with the direction perpendicular to the surface of the multi-layer coating film being set as a projection direction and the distance from the projection site to the surface of the multi-layer coating film (projection distance) being set to be 4 mm. The projection power at the time of projection was a projection power with which the erosion rate with respect to a silicon wafer was 0.635 $\mu$m/g.

Unit projection was carried out such that the erosion depth was in a range of 0.1 to 1 $\mu$m, and the erosion rate of the base layer was measured.

[Measurement of flip-flop value (FF value)]

For a coated test plate obtained, an L* value at a light receiving angle of 15 degrees (L*(15°) value) and an L* value at a light receiving angle of 110 degrees (L*(110°) value) both at an incident angle of 45 degrees were measured using a multi-angle spectrophotometer MA-68II (trade name: manufactured by X-Rite), and an FF value was determined from the following formula.

$$FF\ value = L*(15°)\ value/L*(110°)\ value$$

The flip-flop property was evaluated on the basis of the following criteria using the deviation of the obtained measured FF value from a target FF value ((measured FF value - target FF value)/target FF value). The target FF value is an index empirically derived on the basis of the type and amount of the luster pigment, the thickness and the number of layers of the base layer, etc. The closer to 0 the value of the deviation is, the better the flip-flop property is.

　　○: Within ± 10%
　　×: More than ± 10%

[Measurement of chipping resistance]

The test plates each with a layered coating film obtained in the examples and the comparative examples were subjected to a stone chip test under the conditions shown below using a Gravelometer KSS-1 (produced by Suga Test Instruments Co., Ltd., diamond shot system).

<Test conditions>

**[0231]**

　　Stone size: 6 to 8 mm
　　Amount of stone: 0.7 to 0.8 g/piece
　　Distance: 35 cm
　　Shot pressure: 0.6 kg/cm$^2$
　　Shot angle: 15°
　　Test temperature: -20°C

The area where the coating film was peeled off by the collision was measured using an image processor, and an average value (an average value of 10 samples) was calculated. The chipping resistance was evaluated in the following three grades.

　　⊙ (Excellent): The peeled area was less than 2 mm$^2$.
　　○ (Good): The peeled area was 2 mm$^2$ or more and less than 2.5 mm$^2$.
　　△ (Poor): The peeled area was 2.5 mm$^2$ or more.

[Table 1A]

| | | | | | Example 1 | Example 2 | Example 3 | Example 4 | Example 5 | Example 6 |
|---|---|---|---|---|---|---|---|---|---|---|
| Intermediate coating film | OP-30 | | Manufactured by Nippon Paint Automotive Coatings Co., Ltd. | 35 μm | Present | Present | Absent | Absent | Absent | Absent |
| First base coating film | | Type of first base coating material | | | B1-1 | B1-2 | B1-2 | B1-3 | B1-4 | B1-3 |
| | Coating film-forming resin (A) | Acrylic resin (A1) | Acrylic resin emulsion | parts by mass | 82.0 | 35.0 | 35.0 | 35.0 | 82.0 | 35.0 |
| | | | Water-soluble acrylic resin | parts by mass | - | 15.0 | 15.0 | 15.0 | - | 15.0 |
| | | Urethane resin (A2) | NeoRez R-9603 | parts by mass | 0.0 | 20.0 | 20.0 | 20.0 | 0.0 | 20.0 |
| | | Melamine resin (A3) | CYMEL 327 | parts by mass | 18.0 | 30.0 | 30.0 | 30.0 | 18.0 | 30.0 |
| | | | CYMEL 204 | parts by mass | - | - | - | - | - | - |
| | | Polyol resin (A4) | PX-1000 | parts by mass | - | - | - | - | - | - |
| | | Polyester resin (A5) | | parts by mass | - | - | - | - | - | - |
| | Luster pigment | | LG neoExtra White #325 | parts by mass | 10.0 | 10.0 | 10.0 | - | - | - |
| | | | Aluminum paste MH8801 | parts by mass | - | - | - | 20.0 | 20.0 | 20.0 |

| | | | | | Example 1 | Example 2 | Example 3 | Example 4 | Example 5 | Example 6 |
|---|---|---|---|---|---|---|---|---|---|---|
| Second base coating film | | Type of second base coating material | | | B2-1 | B2-1 | B2-1 | B2-2 | B2-3 | B2-3 |
| | Coating film-forming resin (A) | Acrylic resin (A1) | Acrylic resin emulsion | parts by mass | 44.9 | 44.9 | 44.9 | 40.0 | 44.9 | 44.9 |
| | | | Water-soluble acrylic resin | parts by mass | 10.1 | 10.1 | 10.1 | 15.0 | 10.1 | 10.1 |
| | | Urethane resin (A2) | NeoRez R-9603 | parts bv mass | 31.2 | 31.2 | 31.2 | 30.0 | 14.0 | 14.0 |
| | | Melamine resin (A3) | CYMEL 204 | parts by mass | 8.8 | 8.8 | 8.8 | 10.0 | 26.0 | 26.0 |
| | | Another resin (A4) | PX-1000 | parts by mass | 5.0 | 5.0 | 5.0 | 5.0 | 5.0 | 5.0 |
| | | Polyester resin (A5) | | parts by mass | - | - | - | - | - | - |
| | Luster pigment | | Aluminum paste MH8801 | parts by mass | - | - | - | - | - | - |
| | | | Xirallic T60-10WNT Crystal Silver | parts by mass | - | - | - | - | - | - |

EP 4 296 056 A1

| | | | | Example 1 | Example 2 | Example 3 | Example 4 | Example 5 | Example 6 |
|---|---|---|---|---|---|---|---|---|---|
| Evaluation | Base coating film | Thickness of first base film | $\mu$m | 5 | 5 | 5 | 5 | 5 | 5 |
| | | Thickness of second base film | $\mu$m | 10 | 10 | 10 | 10 | 10 | 10 |
| | | Thickness of base layer | $\mu$m | 15 | 15 | 15 | 15 | 15 | 15 |
| | | Erosion rate of first base | $\mu$m/g | 3.36 | 1.51 | 1.51 | 1.43 | 3.35 | 1.43 |
| | | Erosion rate of second base | $\mu$m/g | 1.44 | 1.39 | 1.39 | 1.41 | 2.34 | 2.34 |
| | | Erosion rate (E') of base layer | $\mu$m/g | 2.08 | 1.43 | 1.43 | 1.42 | 2.67 | 2.03 |
| | | Erosion index (E' $\times$ film thickness) | $\mu$m$^2$/g | 31.2 | 21.5 | 21.5 | 21.3 | 40.1 | 30.5 |
| | Total film | Chipping resistance | Peeled area | mm$^2$ | 1.79 | 1.71 | 1.82 | 1.66 | 2.26 | 1.95 |
| | | | Evaluation | | ⊙ | ⊙ | ⊙ | ⊙ | ○ | ⊙ |
| | | Flip-flop property (L*15°/L*110°) | Target flip-flop value | | 1.4 ± 0.14 | 1.4 ± 0.14 | 1.4 ± 0.14 | 8.5 ± 0.85 | 8.5 ± 0.85 | 8.5 ± 0.85 |
| | | | Measured flip-flop value | | 1.5 | 1.3 | 1.4 | 8.2 | 8.9 | 8.5 |
| | | | Evaluation | | ○ | ○ | ○ | ○ | ○ | ○ |

EP 4 296 056 A1

[Table 1B]

| | | | Example 7 | Example 8 | Example 9 | Example 10 | Example 11 |
|---|---|---|---|---|---|---|---|
| OP-30 | Manufactured by Nippon Paint Automotive Coatings Co., Ltd. | 35 μm | Absent | Absent | Absent | Absent | Absent |
| Type of first base coating material | | | B1-5 | B1-6 | B1-7 | B1-3 | B1-9 |
| Coating film-forming resin (A) | Acrylic resin (A1) | Acrylic resin emulsion | parts by mass | 10.0 | 40 | 10 | 35.0 | 40 |
| | | Water-soluble acrylic resin | parts by mass | 15.0 | 5 | 10 | 15.0 | 5 |
| | Urethane resin (A2) | NeoRez R-9603 | parts by mass | 20.0 | 10 | 40 | 20.0 | 20 |
| | Melamine resin (A3) | CYMEL 327 | parts by mass | - | 20 | 20 | 30.0 | 15 |
| | | CYMEL 204 | parts by mass | 25.0 | 10 | - | - | 10 |
| | Polyol resin (A4) | PX-1000 | parts by mass | 5.0 | 5 | - | - | 5 |
| | Polyester resin (A5) | | parts by mass | 25.0 | 10 | 20 | - | 5 |
| Luster pigment | | LG neoExtra White #325 | parts by mass | - | 15 | - | - | 15 |
| | | Aluminum paste MH8801 | parts by mass | - | - | - | 20.0 | - |
| Type of second base coating material | | | B2-4 | - | B2-5 | B2-2 | - |

| | | | | Example 7 | Example 8 | Example 9 | Example 10 | Example 11 |
|---|---|---|---|---|---|---|---|---|
| Coating film-forming resin (A) | Acrylic resin (A1) | Acrylic resin emulsion | parts by mass | 30.0 | - | 40.0 | 40.0 | - |
| | | Water-soluble acrylic resin | parts by mass | 20.0 | - | 5.0 | 15.0 | - |
| | Urethane resin (A2) | NeoRez R-9603 | parts by mass | 5.0 | - | 5.0 | 40.0 | - |
| | Melamine resin (A3) | CYMEL 204 | parts by mass | 35.0 | - | 35.0 | 0.0 | - |
| | Another resin (A4) | PX-1000 | parts by mass | 0.0 | - | 5.0 | 5.0 | - |
| | Polyester resin (A5) | | parts by mass | 10.0 | - | 10 | - | - |
| Luster pigment | | Aluminum paste MH8801 | parts by mass | 15.0 | - | - | - | - |
| | | Xirallic T60-10WNT Crystal Silver | parts by mass | - | - | 25.0 | - | - |
| Base coating film | Thickness of first base film | | $\mu$m | 8 | 14 | 32 | 5 | 14 |
| | Thickness of second base film | | $\mu$m | 2 | - | 5 | 10 | - |
| | Thickness of base layer | | $\mu$m | 10 | 14 | 37 | 15 | 14 |
| | Erosion rate of first base | | $\mu$m/g | 1.09 | 3.11 | 0.87 | 1.43 | 1.55 |
| | Erosion rate of second base | | $\mu$m/g | 2.11 | - | 1.22 | 1.11 | - |
| | Erosion rate (E') of base layer | | $\mu$m/g | 1.29 | 3.11 | 0.92 | 1.22 | 1.55 |
| | Erosion index (E' × film thickness) | | $\mu$m$^2$/g | 12.9 | 43.5 | 34.1 | 18.3 | 21.7 |

| | | | | Example 7 | Example 8 | Example 9 | Example 10 | Example 11 |
|---|---|---|---|---|---|---|---|---|
| Total film | Chipping resistance | Peeled area | mm$^2$ | 1.39 | 2.48 | 1.99 | 1.51 | 1.75 |
| | | Evaluation | | ⊙ | ○ | ⊙ | ⊙ | ⊙ |
| | Flip-flop property (L*15/L*110°) | Target flip-flop value | | 28 ± 2.8 | 5 ± 0.5 | 1.4 ± 0.14 | 8.5 ± 0.85 | 5 ± 0.5 |
| | | Measured flip-flop value | | 28.3 | 5.1 | 1.28 | 7.7 | 4.3 |
| | | Evaluation | | ○ | ○ | ○ | × | × |

[Table 1C]

| | | | | Comparative Example 1 | Comparative Example 2 | Comparative Example 3 | Comparative Example 4 |
|---|---|---|---|---|---|---|---|
| OP-30 | Manufactured by Nippon Paint Automotive Coatings Co., Ltd. | | 35 μm | Present | Absent | Absent | Absent |
| Type of first base coating material | | | | B1-1 | B1-1 | B1-9 | B1-8 |
| Coating film-forming resin (A) | Acrylic resin (A1) | Acrylic resin emulsion | parts by mass | 82.0 | 82.0 | 40 | 10.0 |
| | | Water-soluble acrylic resin | parts by mass | - | - | 10 | 15.0 |
| | Urethane resin (A2) | NeoRez R-9603 | parts by mass | 0.0 | 0.0 | 5 | 20.0 |
| | Melamine resin (A3) | CYMEL 327 | parts by mass | 18.0 | 18.0 | 20 | 25.0 |
| | | CYMEL 204 | parts by mass | - | - | 10 | - |
| | Polyol resin (A4) | PX-1000 | parts by mass | - | - | 5 | 5.0 |
| | Polyester resin (A5) | | parts by mass | - | - | 10 | 25.0 |
| Luster pigment | | LG neo Extra White #325 | parts by mass | 10.0 | 10.0 | 15 | - |
| | | Aluminum paste MH8801 | parts by mass | - | - | - | - |

EP 4 296 056 A1

| | | | | Comparative Example 1 | Comparative Example 2 | Comparative Example 3 | Comparative Example 4 |
|---|---|---|---|---|---|---|---|
| Type of second base coating material | | | | B2-6 | B2-6 | - | B2-5 |
| Coating film-forming resin (A) | Acrylic resin (A1) | Acrylic resin emulsion | parts by mass | 44.9 | 44.9 | - | 40.0 |
| | | Water-soluble acrylic resin | parts by mass | 10.1 | 10.1 | - | 5.0 |
| | Urethane resin (A2) | NeoRez R-9603 | parts by mass | 5.0 | 5.0 | - | 5.0 |
| | Melamine resin (A3) | CYMEL 204 | parts by mass | 35.0 | 35.0 | - | 35.0 |
| | Another resin (A4) | PX-1000 | parts by mass | 5.0 | 5.0 | - | 5.0 |
| | Polyester resin (A5) | | parts by mass | - | - | - | 10 |
| Luster pigment | | Aluminum paste MH8801 | parts by mass | - | - | - | - |
| | | Xirallic T60-10WNT Crystal Silver | parts by mass | - | - | - | 25.0 |

| | | | | Comparative Example 1 | Comparative Example 2 | Comparative Example 3 | Comparative Example 4 |
|---|---|---|---|---|---|---|---|
| Base coating film | Thickness of first base film | | μm | 5 | 5 | 14 | 32 |
| | Thickness of second base film | | μm | 10 | 10 | - | 5 |
| | Thickness of base layer | | μm | 15 | 15 | 14 | 37 |
| | Erosion rate of first base | | μm/g | 3.36 | 3.36 | 3.28 | 1.51 |
| | Erosion rate of second base | | μm/g | 2.89 | 2.89 | - | 1.22 |
| | Erosion rate (E') of base layer | | μm/g | 3.05 | 3.05 | 3.28 | 1.47 |
| | Erosion index (E' × film thickness) | | μm²/g | 45.7 | 45.7 | 45.9 | 54.4 |
| Total film | Chipping resistance | Peeled area | mm² | 2.82 | 2.80 | 2.59 | 2.70 |
| | | Evaluation | | △ | △ | △ | △ |
| | Flip-flop property (L*15°/L*110°) | Target flip-flop value | | 1.4 ± 0.14 | 1.4 ± 0.14 | 5 ± 0.5 | 1.4 ± 0.14 |
| | | Measured flip-flop value | | 1.4 | 1.4 | 5.2 | 1.31 |
| | | Evaluation | | ○ | ○ | ○ | ○ |

EP 4 296 056 A1

In Examples 1 to 11, which are examples of the present invention, the multi-layer coating films obtained were confirmed to have good chipping resistance. In addition, in Examples 1 to 10, the multi-layer coating films obtained were confirmed to have good designability.

In Comparative Examples 1 to 4, which are examples in which the erosion index of the base layer was high, the chipping resistance was not sufficiently satisfactory.

INDUSTRIAL APPLICABILITY

The multi-layer coating film of the present invention has good chipping resistance, preferably further has good designability, and can be suitably used for coating of automobile bodies and the like.

**Claims**

1. A multi-layer coating film comprising a substrate, a base layer formed on the substrate, and a clear layer formed on the base layer,

   wherein the base layer comprises a luster pigment, and
   wherein the base layer has an erosion index of 45 $\mu$m$^2$/g or less where the erosion index is a value obtained by multiplying an erosion rate of the base layer by a thickness of the base layer, and
   wherein the erosion rate of the base layer is measured using a micro slurry jet erosion method at a projection power with which an erosion rate with respect to a silicon wafer is 0.635 $\mu$m/g.

2. The multi-layer coating film according to claim 1,

   wherein the base layer comprises one or two or more layers, and
   wherein an nth layer is defined as an nth base layer in a case where the base layer comprises two or more layers,
   wherein an erosion index is calculated on a basis of the following formula:

   [Formula 1]

   $$\text{Erosion index} \ (\mu\text{m}^2/\text{g}) \ = \sum_{i=1}^{n}(E_i' \times t_i)$$

   wherein n represents an integer of 2 or more,
   wherein the erosion rate of the nth base layer measured using a micro slurry jet erosion method at a projection power at which an erosion rate with respect to a silicon wafer is 0.635 $\mu$m/g is represented by $E_n'$ ($\mu$m/g), and
   wherein a thickness of the nth base layer is represented by $t_n$ ($\mu$m).

## INTERNATIONAL SEARCH REPORT

International application No.

**PCT/JP2022/006993**

### A. CLASSIFICATION OF SUBJECT MATTER

***B32B 27/20***(2006.01)i; ***C09D 5/00***(2006.01)i; ***C09D 5/29***(2006.01)i; ***C09D 7/61***(2018.01)i
FI:    B32B27/20 A; C09D5/00 D; C09D7/61; C09D5/29

According to International Patent Classification (IPC) or to both national classification and IPC

### B. FIELDS SEARCHED

Minimum documentation searched (classification system followed by classification symbols)

B32B1/00-43/00; C09D1/00-201/10

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2006-239535 A (NIPPON PAINT CO LTD) 14 September 2006 (2006-09-14)<br>entire text | 1-2 |
| A | JP 2016-185527 A (NIPPON PAINT AUTOMOTIVE COATINGS CO LTD) 27 October 2016 (2016-10-27)<br>entire text | 1-2 |
| A | JP 2020-105370 A (NIPPON PAINT AUTOMOTIVE COATINGS CO LTD) 09 July 2020 (2020-07-09)<br>entire text | 1-2 |
| A | JP 2007-106870 A (NISSAN MOTOR CO LTD) 26 April 2007 (2007-04-26)<br>entire text | 1-2 |
| A | JP 2012-157827 A (KANSAI PAINT CO LTD) 23 August 2012 (2012-08-23)<br>entire text | 1-2 |
| A | JP 2014-135652 A (FUJITSU LTD) 24 July 2014 (2014-07-24)<br>entire text | 1-2 |

☐ Further documents are listed in the continuation of Box C.          ☑ See patent family annex.

| | |
|---|---|
| *    Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **29 March 2022** | **19 April 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/006993**

| Patent document cited in search report | | | Publication date (day/month/year) | Patent family member(s) | | | Publication date (day/month/year) |
|---|---|---|---|---|---|---|---|
| JP | 2006-239535 | A | 14 September 2006 | (Family: none) | | | |
| JP | 2016-185527 | A | 27 October 2016 | WO | 2016/158692 | A1 | |
| | | | | CN | 107969118 | A | |
| | | | | MX | 2017012296 | A | |
| JP | 2020-105370 | A | 09 July 2020 | WO | 2020/137556 | A1 | |
| JP | 2007-106870 | A | 26 April 2007 | (Family: none) | | | |
| JP | 2012-157827 | A | 23 August 2012 | (Family: none) | | | |
| JP | 2014-135652 | A | 24 July 2014 | (Family: none) | | | |

Form PCT/ISA/210 (patent family annex) (January 2015)

**EP 4 296 056 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020094075 A
- JP 4224192 B
- JP 55041607 B
- JP 43076 B
- JP 48041718 B
- JP 5177123 A
- JP 54037082 A
- JP 7024746 B
- JP 4210220 A
- JP 60016631 A

- JP 2000612 A
- JP 63241018 A
- JP 1279919 A
- JP 6100642 A
- JP 46007294 A
- US 4656226 A
- US 4032698 A
- US 4070388 A
- JP 1204914 A

**Non-patent literature cited in the description**

- Polymer Handbook. Wiley-Interscience, 1999